# EUROPEAN PATENT SPECIFICATION

(11) **EP 1 812 906 B1**
(45) Date of publication and mention of the grant of the patent: **01.04.2020**
(21) Application number: 05803048.7
(22) Date of filing: 04.11.2005
(51) Int. Cl.: G06T 11/00

(54) **SCREEN EDIT APPARATUS, SCREEN EDIT METHOD, AND SCREEN EDIT PROGRAM**
SCHIRMEDITIERVORRICHTUNG, SCHIRMEDITIERVERFAHREN UND SCHIRMEDITIERPROGRAMM
APPAREIL D'EDITION PLEINE PAGE, PROCEDE D'EDITION PLEINE PAGE ET PROGRAMME D'EDITION PLEINE PAGE

(30) Priority: 19.11.2004 JP 2004336318; 26.09.2005 JP 2005278410
(43) Date of publication of application: 01.08.2007
(73) Proprietor: FUJIFILM Corporation, Minato-ku Tokyo 106-8620 (JP)
(72) Inventor: NISHIJIMA, Masakazu, Asaka-shi, Saitama, 351-8585 (JP)
(74) Representative: Grünecker Patent- und Rechtsanwälte PartG mbB
(86) International application number: PCT/JP2005/020666
(87) International publication number: WO 2006/054484

(56) References cited:
- EP-A2- 1 408 452
- EP-A2- 1 443 462
- JP-A- 5 265 683
- JP-A- 5 282 421
- JP-A- 11 095 971
- JP-A- 2003 323 241
- JP-A- 2004 180 267

## Description

### BACKGROUND OF THE INVENTION

### Technical Field

The present invention relates to a screen edit apparatus, screen edit method, and a screen editing program, and more specifically to a technology of easily and precisely editing various objects displayed on the screen such as a trimming operation, etc.

### Background Art

Conventionally, there have been various technologies developed for easily performing an image trimming operation. For example, electronic still-video camera of Japanese Patent Application Publication No. 2000-217024 (hereinafter referred to as Document 1) has a + button and a - button operated by the thumb of the right hand of an operator, and a center-click cross key operated by the thumb of the left hand of the operator to scale up a regenerated image in an desired size at an desired position. By pressing a shutter button using the forefinger of the right hand, the scaled up image can be loaded as a separate image in a memory card (trimming function). Thus, the operator can be provided with the operability of easily and stably holding SET and the arrangement of the buttons.

The screen editing method of Japanese Patent Application Publication No. 2004-180267 (hereinafter referred to as Document 2) is featured by: an instructing step of issuing an instruction to move an desired point of an image displayed in an image display area in the image data; an arithmetic step of calculating the amount of movement and the scale-up factor of an image according to the move instruction; and a display step of displaying a predetermined area of image data in an image display area according to the calculated amount of movement and scale-up factor of the image. In this method, an image can be moved and scaled up only by a user performing a one-step operation, and a trimming operation can be performed with the composition of an image for printing.

EP 1 408 452 A2 discloses an image editing technique that adjust the size of the trimming frame so that the trimming frame matches the edge of the image when the image becomes outside the frame due to the movement of the trimming frame.

### Disclosure of the Invention

In the technology of Document 1, the trimming area matches the display area, and the trimming area can be easily confirmed. However, since the aspect ratio of the trimming area is the same as the aspect ratio of the display area, the trimming area cannot be determined with a desired aspect ratio. Furthermore, in the technology of Document 2, although a trimming area can be confirmed in a simple operation, this is inconvenient in that it is necessary to additionally scale up and display an image at the start and the end of the trimming operation for performing the trimming operation accurately. The present invention has been developed to solve the above-mentioned problems, and aims at providing a screen edit apparatus, a screen editing method, and a screen editing program capable of designating an edit area accurately in a simple operation.

To solve the above-mentioned problems, the present invention provides a screen edit apparatus including: a designation unit for designating a starting point and an ending point being cater-cornered points of an edit frame as a determination criteria of a desired edit area for a desired edit target on a screen by a movement of a pointer; a calculation unit for calculating an amount of movement of the pointer in a predetermined unit time while the designation of the cater-cornered points continues, wherein designation of the ending point starts when the pointer moves; and a display control unit for changing a display scaling of the edit target according to the amount of movement of the pointer in the predetermined unit time, and displaying the edit target on a display device.

The screen edit apparatus scales up or down and displays the edit target according to the amount of movement in a unit time of a pointer when the edit area is designated by a movement of the pointer. That is, the edit target can be scaled up or down and displayed only by changing the amount of movement of the pointer. The edit target can be appropriately scaled up only by the movement of the pointer without an additional operation, and the edit area can be designated accurately.

The display control unit can scale up and display an edit target by a predetermined scale-up factor when the amount of movement of the pointer in a predetermined unit time is less than a predetermined amount.

The display control unit can scale down and display an edit target by a predetermined scale-down factor when the designation of a reference point is released.

The predetermined scale-down factor can be a scaling with which an edit target is adapted to a display area of a display device and displayed.

The display control unit can display an edit frame indicating the edge of the edit area on the display device.

The designation unit can designate a movement of the cater-cornered point of the edit frame by the movement of the pointer. The calculation unit can calculate the amount of movement of the pointer in the predetermined unit time while the designation of the movement of the cater-cornered point continues. The display control unit can scale up or scale down the edit target according to the amount of movement of the pointer in the predetermined unit time and display the edit target on the display device.

Thus, by changing the amount of movement of the pointer, an edit target can be scaled up or down, and the cater-cornered point can be moved accurately.

The display control unit can move and display the cater-cornered point according to the designation of the movement of the cater-cornered point. A cater-cornered point includes a starting point and an ending point of a rectangular edit frame.

The designation unit can designate the movement of the edit frame by the movement of the pointer. The calculation unit can calculate the amount of movement of the pointer in the predetermined unit time while the designation of the movement of the edit frame continues. The display control unit can scale up or scale down the edit target according to the amount of movement of the pointer in the predetermined unit time, and display the edit target on the display device.

Thus, the edit frame can be moved accurately while scaling up or down the edit target by changing the amount of movement of the pointer.

The display control unit can move and display the edit frame according to the designation of the movement of the edit frame.

The designation unit can designate a size change of the edit frame by the movement of the pointer. The calculation unit can calculate the amount of movement of the pointer in the predetermined unit time while the designation of the size change of the edit frame continues. The display control unit can scale up or scale down the edit target according to the amount of movement of the pointer in the predetermined unit time, and display the edit target on the display device.

Thus, the edit frame can be moved accurately while scaling up or down the edit target by changing the amount of movement of the pointer.

The display control unit can change the size of the edit frame according to the designation of the size change of the edit frame and display the edit target.

According to a size relationship between predetermined plural stepwise thresholds and the amount of movement of the pointer in the predetermined unit time, the display control unit can switch a display scaling of the edit target to any of predetermined plural stepwise factors corresponding to the size relationship, and display the edit target on the display device.

Thus, the display scaling of the edit target can be smoothly switched, and the edit target can be confirmed without paying special attention to switching a display scaling.

The display control unit can change a display scaling such that a part of the edit target enclosed by the edit frame can be adapted to the area of the display device when the designation of the reference point is released, and then display the edit target.

That is, after selecting a display range, details can be confirmed with only the selected portion displayed in the maximum size.

According to the amount of movement of the pointer in the predetermined time being less than a predetermined amount, the display control unit can stepwise change the display scaling of the edit target, and display the edit target.

Thus, while the pointer stops or almost stops, the display scaling of the edit target is gradually increased, and it is not necessary to stepwise designate the scale-up of a display scaling.

According to the amount of movement of the pointer in the predetermined unit time being a predetermined amount or more, the display control unit can maintain a current display scaling and display the edit target.

According to the amount of movement of the pointer in the predetermined unit time being the predetermined amount or more, the display control unit can change the display scaling of the edit target to a display scaling adapted to the display area of the display device, and display the edit target.

Thus, by moving the pointer by a predetermined amount or more in a unit time, the edit target can be automatically displayed on the entire screen, and the entire edit target can be easily confirmed.

According to the amount of movement of the pointer in the predetermined unit time, the display control unit can scale up or scale down the edit target in a predetermined first display area of the display device, and display the edit target, and display an entire edit target in a predetermined second display area of the display device.

Thus, the entire screen constantly displayed in the second display area and the detailed portion displayed on the first display area can be simultaneously confirmed, thereby performing detailed editing operation.

The present invention also provides a screen edit apparatus including: a designation unit for designating a movement of a pointer designating a reference point as a determination criteria of a desired edit area for a desired edit target on a screen, and accepting an instruction to scale up the edit target while the designation of the reference point continues; and a display control unit for scaling up the edit target by a predetermined scale-up factor according to the scale-up instruction, and displaying the edit target on a display device when the scale-up instruction for the edit target is accepted while the designation of the reference point continues.

According to the present invention, an edit target can be appropriately scaled up by issuing a scale-up instruction during the designation of an edit area, thereby designating an edit area accurately.

The display control unit can scale down and display the edit target by a predetermined scale-down factor when the designation of the reference point is released.

The present invention provides a screen edit apparatus including: a designation unit for designating a movement of an edit frame indicating an edge of a desired edit area for a desired edit target on a screen by a pointer; a calculation unit for calculating an amount of movement of the pointer in a predetermined unit time while the designation of the movement of the edit frame continues; and a display control unit for changing a display scaling of the edit target according to the amount of movement of the pointer in the predetermined unit time, and displaying the edit target on a display device.

The screen edit apparatus scales up or down and displays an edit target according to the amount of movement in a unit time of a pointer when a movement of an edit frame is designated by the pointer. That is, the edit target can be scaled up or down and displayed only by changing the amount of movement of the pointer. The edit target can be appropriately scaled up only by the movement of the pointer without an additional operation, and the movement of the edit frame can be designated accurately.

The present invention also provides a screen edit apparatus including: a designation unit for designating a size change of an edit frame indicating an edge of a desired edit area for a desired edit target on a screen by a pointer; a calculation unit for calculating an amount of movement of the pointer in a predetermined unit time while the designation of the size change of the edit frame continues; and a display control unit for changing a display scaling of the edit target according to the amount of movement of the pointer in the predetermined unit time, and displaying the edit target on a display device.

The screen edit apparatus scales up or down and displays an edit target according to the amount of movement in a unit time of a pointer when a size change of an edit frame is designated by the pointer. That is, the edit target can be scaled up or down and displayed only by changing the amount of movement of the pointer. The edit target can be appropriately scaled up only by the movement of the pointer without an additional operation, and the size change of the edit frame can be designated accurately.

The present invention also provides a screen editing method including steps of designating a reference point as a determination criteria of a desired edit area for a desired edit target on a screen by a movement of a pointer; calculating an amount of movement of the pointer in a predetermined unit time while the designation of the reference point continues; and changing a display scaling of the edit target according to the amount of movement of the pointer in the predetermined unit time, and displaying the edit target on a display device.

The present invention also provides a screen editing method including steps of designating a movement of a pointer designating a reference point as a determination criteria of a desired edit area for a desired edit target on a screen, and accepting an instruction to scale up the edit target while the designation of the reference point continues; and scaling up the edit target by a predetermined scale-up factor according to the scale-up instruction, and displaying the edit target on a display device when the scale-up instruction for the edit target is accepted while the designation of the reference point continues.

The present invention also provides a screen editing method including steps of designating a movement of an edit frame indicating an edge of a desired edit area for a desired edit target on a screen by a pointer; calculating an amount of movement of the pointer in a predetermined unit time while the designation of the movement of the edit frame continues; and changing a display scaling of the edit target according to the amount of movement of the pointer in the predetermined unit time, and displaying the edit target on a display device.

The present invention also provides a screen editing method including steps of designating a size change of an edit frame indicating an edge of a desired edit area for a desired edit target on a screen by a pointer; calculating an amount of movement of the pointer in a predetermined unit time while the designation of the size change of the edit frame continues; and changing a display scaling of the edit target according to the amount of movement of the pointer in the predetermined unit time, and displaying the edit target on a display device.

The present invention also provides a screen editing program for instructing a computer to perform the process including steps of designating a reference point as a determination criteria of a desired edit area for a desired edit target on a screen by a movement of a pointer; calculating an amount of movement of the pointer in a predetermined unit time while the designation of the reference point continues; and changing a display scaling of the edit target according to the amount of movement of the pointer in the predetermined unit time, and displaying the edit target on a display device.

The present invention also provides a screen editing program for instructing a computer to perform the process including steps of designating a movement of a pointer designating a reference point as a determination criteria of a desired edit area for a desired edit target on a screen, and accepting an instruction to scale up the edit target while the designation of the reference point continues; and scaling up the edit target by a predetermined scale-up factor according to the scale-up instruction, and displaying the edit target on a display device when the scale-up instruction for the edit target is accepted while the designation of the reference point continues.

The present invention also provides a screen editing program for instructing a computer to perform the process including steps of designating a movement of an edit frame indicating an edge of a desired edit area for a desired edit target on a screen by a pointer; calculating an amount of movement of the pointer in a predetermined unit time while the designation of the movement of the edit frame continues; and changing a display scaling of the edit target according to the amount of movement of the pointer in the predetermined unit time, and displaying the edit target on a display device.

The present invention also provides a screen editing program for instructing a computer to perform the process includes steps of designating a size change of an edit frame indicating an edge of a desired edit area for a desired edit target on a screen by a pointer; calculating an amount of movement of the pointer in a predetermined unit time while the designation of the size change of the edit frame continues; and a display control step of changing a display scaling of the edit target according to the amount of movement of the pointer in the predetermined unit time, and displaying the edit target on a display device.

The screen edit apparatus scales up or down and displays an edit target according to the amount of movement in a unit time of a pointer when an edit area is designated by a movement of the pointer. That is, the edit target can be scaled up or down and displayed only by changing the amount of movement of the pointer. The edit target can be appropriately scaled up only by the movement of the pointer without an additional operation, and the edit area can be designated accurately.

### Brief Description of the Drawings

Figure 1 shows the configuration of the central portion of the print processing system according to a preferable embodiment of the present invention;
Figure 2 is a flowchart of the trimming frame generating process relating to the first embodiment of the present invention;
Figure 3 shows an example of well-fitting display;
Figure 4 shows an example of scale-up display;
Figure 5 shows the state of designating a trimming area on well-fitting display;
Figure 6 shows the state of designating a trimming area on well-fitting display;
Figure 7 shows the state of designating a trimming area on well-fitting display;
Figure 8 shows the state of designating a trimming area on well-fitting display;
Figure 9 shows the state of designating a trimming area on scale-up display;
Figure 10 shows the state of designating a trimming area on scale-up display;
Figure 11 shows a trimming area on well-fitting display;
Figure 12 is a flowchart showing the flow of the starting point moving process;
Figure 13 shows the position of the starting point on well-fitting display;
Figure 14 shows the position of the starting point on scale-up display;
Figure 15 shows the state in which the position of the starting point is changed on scaled up and displayed;
Figure 16 is a flowchart of the trimming frame moving process;
Figure 17 shows a trimming area on well-fitting display;
Figure 18 shows a trimming area on scale-up display;
Figure 19 shows the state in which the movement of a trimming frame is designated on scale-up display;
Figure 20 shows a trimming area on well-fitting display;
Figure 21 is a flowchart of the frame size changing process;
Figure 22 shows a trimming area on well-fitting display;
Figure 23 shows a trimming area on scale-up display;
Figure 24 shows the state in which a size change of the trimming frame is designated on scale-up display;
Figure 25 shows a trimming area on well-fitting display;
Figure 26 is a flowchart of the trimming frame generating process relating to the second embodiment of the present invention;
Figure 27 is a flowchart of the trimming frame generating process relating to the third embodiment of the present invention;
Figure 28 shows a target image on well-fitting display in the first and second display areas when the starting point of a trimming frame is designated;
Figure 29 shows a target image on scale-up display in the first display area and on well-fitting display in the second display area during designation of the ending point of a trimming frame;
Figure 30 shows a target image on well-fitting display in the first and second display areas during the designation of the ending point of a trimming frame;
Figure 31 shows a target image on scale-up display in the first display area and on well-fitting display in the second display area during designation of the ending point of a trimming frame;
Figure 32 shows a target image on well-fitting display in the first and second display areas after the ending point of a trimming frame is designated;
Figure 33 is a flowchart of the trimming frame generating process relating to the fourth embodiment of the present invention;
Figure 34 shows a target image displayed at scale-up factor B magnification when the designation of the starting point of a trimming frame is started;
Figure 35 shows a target image displayed at scale-up factor A magnification when the designation of the starting point of a trimming frame is started;
Figure 36 shows a target image displayed at scale-up factor 1 magnification when the designation of the starting point of a trimming frame is started;
Figure 37 shows a target image displayed at scale-up factor 1 magnification during the designation of the ending point of a trimming frame;
Figure 38 shows a target image displayed at scale-up factor A magnification during the designation of the ending point of a trimming frame;
Figure 39 shows a target image displayed at scale-up factor B magnification during the designation of the ending point of a trimming frame;
Figure 40 shows a target image in a trimming frame on well-fitting display after the ending point of the trimming frame is designated;
Figure 41 is a flowchart of the trimming frame generating process relating to the fifth embodiment of the present invention;
Figure 42 shows a target image displayed at scale-up factor V(0) magnification when the starting point of a trimming frame is designated;
Figure 43 shows a target image displayed at scale-up factor V(1) magnification during the designation of the ending point of a trimming frame;
Figure 44 shows a target image displayed at scale-up factor V(2) magnification during the designation of the ending point of a trimming frame;
Figure 45 shows a target image displayed with the scale-up factor V(2) magnification maintained by the movement of a pointer exceeding a threshold;
Figure 46 shows a target image displayed at scale-up factor V(3) magnification during the designation of the ending point of a trimming frame;
Figure 47 shows a target image in a trimming frame on well-fitting display after the ending point of the trimming frame is designated;
Figure 48 is a flowchart of the trimming frame generating process relating to the sixth embodiment of the present invention;
Figure 49 shows a target image displayed at scale-up factor V(0) magnification when the starting point of a trimming frame is designated;
Figure 50 shows a target image displayed at scale-up factor V(1) magnification during the designation of the ending point of a trimming frame;
Figure 51 shows a target image displayed at scale-up factor V(2) magnification during the designation of the ending point of a trimming frame;
Figure 52 shows a target image displayed with the scale-up factor V(2) magnification maintained by the movement of a pointer exceeding a threshold;
Figure 53 shows a target image on well-fitting display during the designation of the ending point of the trimming frame;
Figure 54 shows a target image displayed at scale-up factor V(1) magnification during the designation of the ending point of a trimming frame;
Figure 55 shows a target image displayed at scale-up factor V(2) magnification during the designation of the ending point of a trimming frame;
Figure 56 shows a target image on well-fitting display in a trimming frame after the ending point of the trimming frame is designated;
Figure 57 shows an example of displaying a character edit frame in word processing software; and
Figure 58 shows the state in which characters in a character edit frame on well-fitting display.

### Best Mode for Carrying Out the Invention

The preferred embodiments of the present invention are described below with reference to the attached drawings.

### <First Embodiment>

### [General Configuration]

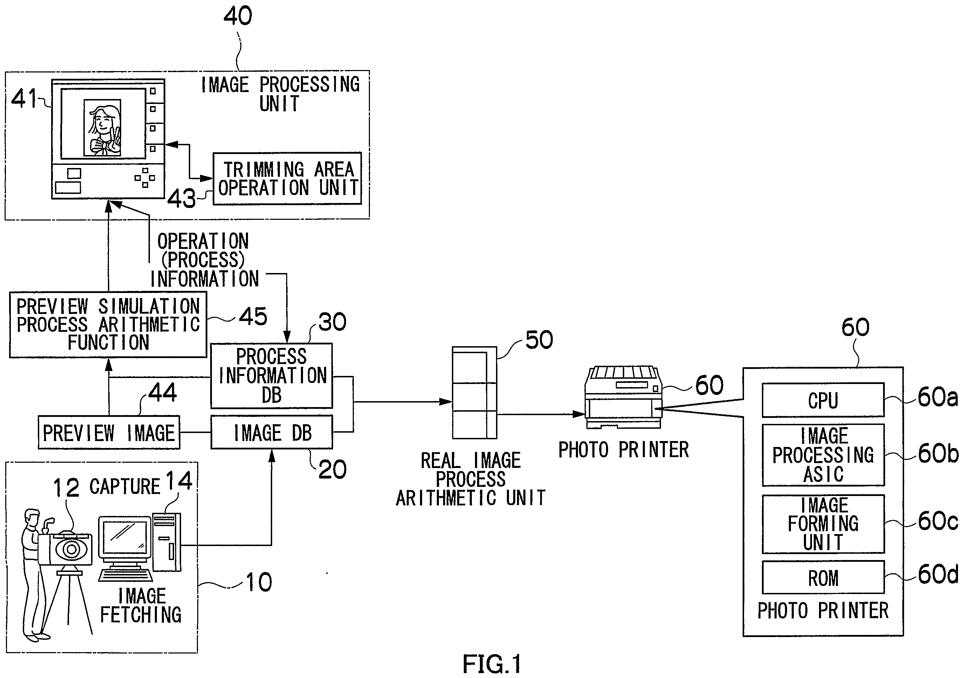

Figure 1 shows the configuration of the central portion of the print processing system to which an image processing device of the present invention is applied.

The print processing system is configured mainly by a capture device 10, an image database 20, a process information database 30, an image processing unit 40, a real image process arithmetic unit 50, and a photo printer 60.

The capture device 10 includes a digital camera 12 and an image fetch unit 14 having a personal computer, and the digital camera 12 and the image fetch unit 14 are connected through an interface such as an IEEE 1394, etc.

The photographer of a photo shop operates the digital camera 12, changes postures, costume, etc. for a customer, and takes several tens of pictures. Thus, an image file storing digitally captured digital images (original images) is transferred from the digital camera 12 to the image fetch unit 14 for each capturing process.

The image fetch unit 14 transmits the image file fetched from the digital camera 12 to the image database 20. The image fetch unit 14 can fetch an image file of original images through a recording medium of the digital camera 12. The image data of an original image is unprocessed raw data.

The image database 20 manages the original image transmitted from the image fetch unit 14, and the process information database 30 manages the process information for the original image.

The image processing unit 40 performs a trimming process of determining an angle of view for printing for an image (target image) selected by presentation, etc., and is configured by a personal computer, etc. into which the software for the process is incorporated. The process information indicating the trimming area in which a trimming operation is performed by the image processing unit 40 is registered in the process information database 30.

Also stored in the process information database 30 is the process information indicating the image processing condition such as the gray scale of color, sharpness, etc. arranged in the image processing by an image processing unit not shown in the attached drawings. The process of forming an image including the trimming process by the image processing unit 40 is not a process performed on an original image itself stored in the image database 20, but is a process of storing only the process information in the process information database 30.

The real image process arithmetic unit 50 reads an original image instructed to be printed from the image database 20 when an instruction to print an image selected for printing is input, reads an image processing condition for forming an image including the trimming area corresponding to the original image instructed to be printed from the process information database 30, the image process is performed based on the image processing condition on which the original image is read, and print data is generated. The print data is output to the photo printer 60. The print data is distinguished between the transparent portion of image data and other color portions. When the three primary color components of color information is represented by 8 bits per color (red: green: blue), the real image process arithmetic unit 50 acquires from ROM 60d the three primary color components of red: green: blue as a (FF: FF; FF) hexadecimal for a clear color, and a (FE: FE: FE) hexadecimal for white, etc. by communicating data representation definition for discrimination between a clear portion and other colors with the photo printer 60.

When a CPU 60a of the photo printer 60 receives image data from the real image process arithmetic unit 50, it identifies a portion of a clear color from other portions according to the data representation definition stored in the ROM 60d. Upon receipt of the information, an image processing ASIC 60b does not print the clear color portion, but converts the other portions to a YMC signal required for regeneration of an image. An image forming unit 60c scans and exposes the color paper of a silver salt system according to the YMC signal using R, G, B lasers, and prints an image.

The ROM 60d stores a list of paper sizes available by the photo printer 60, and the real image process arithmetic unit 50 communicates with the photo printer 60 to acquire a list of paper sizes. The ROM 60d stores for each paper size an upper marginal area T, a lower marginal area B, a left marginal area L, and a right marginal area R. These marginal areas can be changed by an operation button, etc. not shown in the attached drawings, but is provided for the photo printer 60. The real image process arithmetic unit 50 can communicate with the photo printer 60 to acquire the marginal areas T, B, L, and R corresponding to the paper size designated by a trimming area operation unit 43.

Described below is the image processing unit 40 shown in Figure 1.

The image processing unit 40 has a monitor device 41 and the trimming area operation unit 43.

The monitor device 41 displays an operation screen used as a GUI (graphical user interface) for operation by an operator of a photo shop, and also displays an target image to be trimmed, a trimming process result, a guide line, etc.

If a target image to be trimmed is selected using the operation screen of the monitor device 41, the original image corresponding to the target image is read from the image database 20. An original image formed by raw data digitally developed by a preview image processing unit 44, and processed to be displayed as a preview image on the monitor device 41. When the image processing condition including the trimming area corresponding to the original image is stored in the process information database 30, a preview pseudo-process arithmetic function 45 applies the image processing condition corresponding to the original image to the preview image, and displays the process result on the monitor device 41.

When a target image before processed in a trimming operation is displayed on the monitor device 41, and the trimming operation is performed on the target image, a trimming frame is first set for the target image currently being displayed. Setting a trimming frame is performed by designating the coordinates of the starting point and the ending point as two cater-cornered points of a rectangle prescribing a trimming area by a pointer displayed on the target image.

The target image displayed on the monitor device 41 is trimmed such that the its aspect ratio can equals that of the set trimming frame according to the information about the aspect ratio of the set trimming frame. For example, when the image size of the original image is, for example, ultra XGA (1600 × 1200 dots), the aspect ratio of the original image is 4:3. On the other hand, when an A4 form (297 × 210 mm) is selected as a printing paper size, the aspect ratio is 10:7. Therefore, when the aspect ratio of the paper size (trimming frame) is determined, the target image is trimmed to match the aspect ratio, and the trimmed target image is displayed on the monitor device 41.

The trimming area operation unit 43 automatically or manually scales up/down and moves a target image. When a manual operation is selected, a zoom button for scaling up/down a target image or a cross key (not shown in the attached drawings) for moving a target image are operated. When a trimming area determination button not shown in the attached drawings is pressed, the trimming area of a target image is determined based on the scale-up/down factor and movement of a target image in a manual operation, and the operation (process) information indicating the trimming area is registered in the process information database 30.

In the present embodiment, a target image is scaled up/down according to the amount of movement of a trimming area designated by the trimming area operation unit 43. Furthermore, when a trimming frame and a guide line is scaled up/down and moved, a target image is scaled up/down according to the size of the scale-up/down and the amount of movement.

It is preferable that display or non-display of the trimming frame, etc. to be displayed on a target image can be appropriately selected. Thus, when an image processing condition such as the gray scale of color, sharpness, etc. is set, it is possible to prevent the trimming frame, etc. from being a disturbance. Furthermore, in the present embodiment, the original image of a target image and the image processing condition including the trimming area applied to the original image are separately managed. However, if the image processing condition is determined, the original image can be processed on the determined image processing condition, and the process result can be stored.

### [Flow of Process]

Described below is the flow of the process performed with the trimming process by the print processing system.

### (Trimming Frame Generating Process)

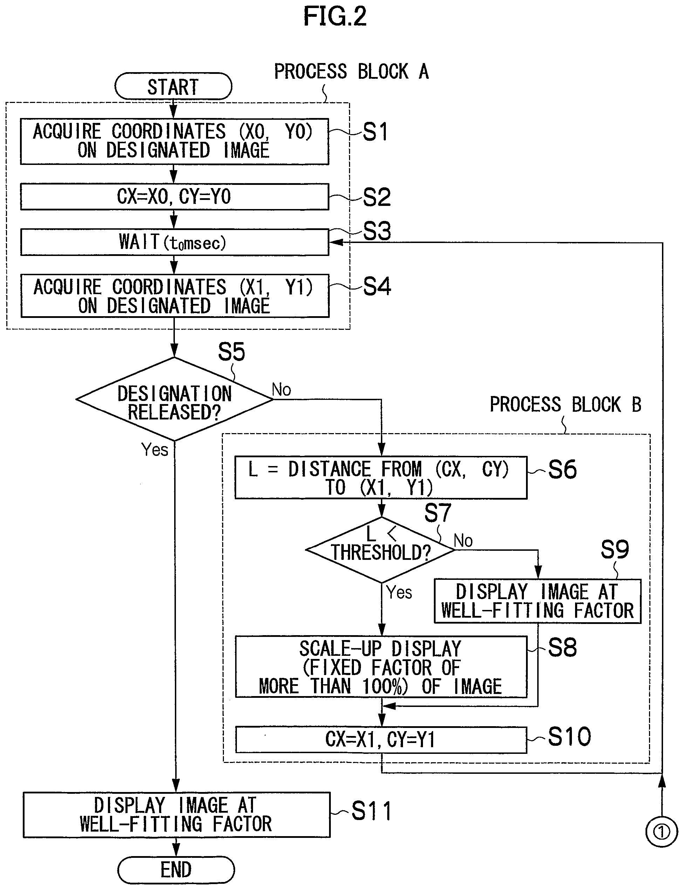

Figure 2 is a flowchart of the trimming frame generating process. The process scales up/down a target image according to the amount of movement of a pointer when a trimming area is designated by designating the movement of the pointer from the trimming area operation unit 43. This process is started when the designation of a trimming area is started (or when a mouse is clicked).

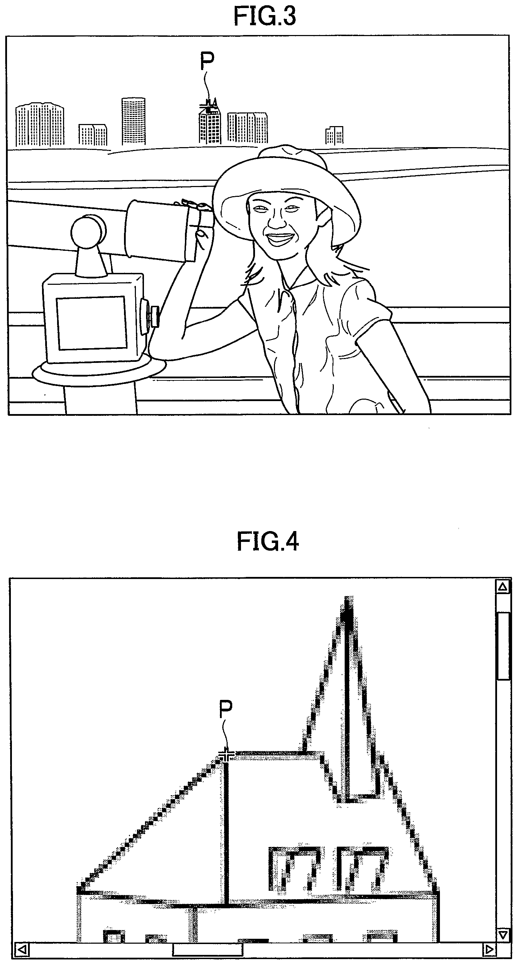

In S1, as shown in Figure 3, the trimming area operation unit 43 is manually operated (designation of the feature point by a mouse cursor, etc.) starts the designation of the coordinates of two cater-cornered points (hereinafter referred to as a starting point and an ending point) of the rectangle (box) prescribing the trimming area in the subjects recorded in the image by the movement of the pointer displayed on the image. A starting point P0 can be designated by moving the pointer to a desired position by, for example, dragging the mouse and then clicking it. The image processing unit 40 can acquire the coordinates (X0, Y0) of the designated starting point P0.

In S2, CX = X0 and CY = Y0 are set.

In S3, the designation of an ending point starts when the pointer moves. For example, while the pointer moving operation continues by dragging and dropping the mouse by holding the mouse click as the designation of, for example, the starting point P0 (X0, Y0), the designation of an ending point continues. While the designation of the ending point continues, the passage of a predetermined time t0 is repeatedly counted. In S4, the image processing unit 40 acquires the coordinates (X1, Y1) of the position P1 of the current pointer at the time when a predetermined time t0 passes from the time when CX = X0, CY = Y0 is obtained. Described below are the processes in steps S1 to S4 as a process block A.

In S5, it is determined whether or not the designation of the trimming area by the trimming area operation unit 43 has been released. The designation can be released by releasing the mouse click continued in, for example, the drag and drop state. If the designation of the trimming area has been released, S11 starts. If the designation has not been released, S6 starts.

In S6, the amount of movement of a pointer for the distance L from (CX, CY) to (X1, Y1), that is, in the predetermined time t0, is calculated.

In S7, it is determined whether or not the amount of movement of a pointer in a predetermined unit time t0 is less than a predetermined amount. The determination is made by determining whether or not, for example, a distance L is less than a predetermined threshold L0. If the amount of movement of the pointer is less than the predetermined amount, S8 starts. If the amount of movement of a pointer is equal to or more than the predetermined amount, S9 starts.

In S8, a target image is scaled up and displayed by a predetermined scale-up factor. The predetermined scale-up factor is a fixed factor over 100 %.

In S9, a target image is scaled down and displayed by a predetermined scale-down factoring which it is adapted to a display area of the monitor device 41 and displayed. The predetermined scale-down factor is a fixed factor less than 100 %. Hereinafter, it is referred to as well-fitting display.

In S10, CX = X1, CY = Y1 are set. Hereinafter, the processes in steps S6 to S10 are referred to as a process block B. After the process of the process block B, S3 starts again, the amount of movement L of the pointer in the predetermined time t0 is calculated, and the process of scaling up or scaling down and displaying the target image according to the size relationship between the amount of movement L and the threshold L0 is repeated.

In S11, the target image is displayed so as to fill the entire screen, thereby terminating the process.

Although not shown in the attached drawings, the process of displaying a rectangle defined by the starting point P0 and the current pointer position P1 as a trimming frame prescribing the edge of the trimming area of an image is performed parallel to the above-mentioned trimming frame generating process. A display example of the trimming frame in this process is shown in Figures 3 to 11.

Figure 3 shows the state in which the pointer P designates the starting point P0 on well-fitting display. Figure 4 shows the state in which, after designating the starting point P0, no pointer move designation equal to or more than a threshold L0 is found at least for a predetermined unit time t0, and a target image is scaled up by a predetermined scaling.

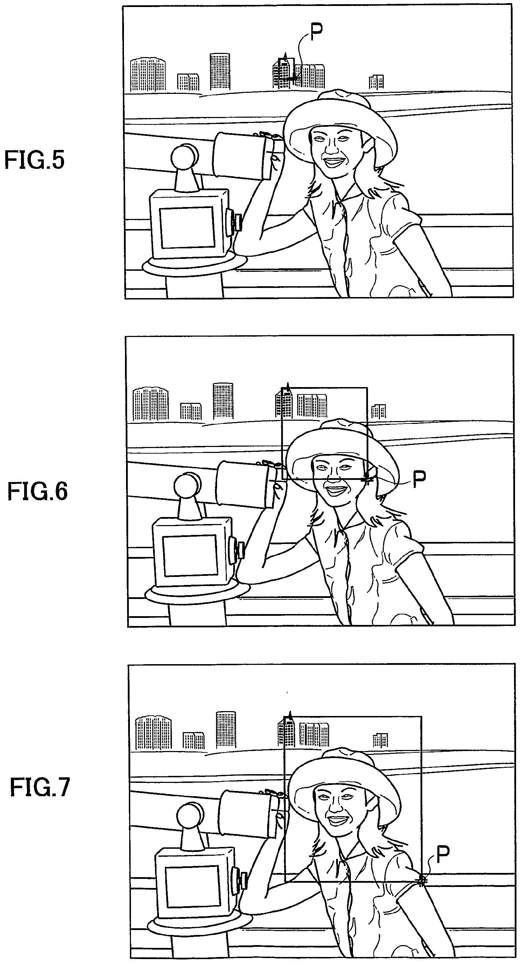

On the other hand, in Figures 5 to 8, after the designation of the starting point P0 by a pointer, the moving distance L of the pointer in a predetermined time t0 is equal to or more than the predetermined threshold L0, and a trimming frame is displayed with the target image on well-fitting display by a predetermined scale-down factor. That is, after the pointer designates the starting point P0, a target image is not scaled up and displayed while the ending point P1 of a trimming frame is roughly designated.

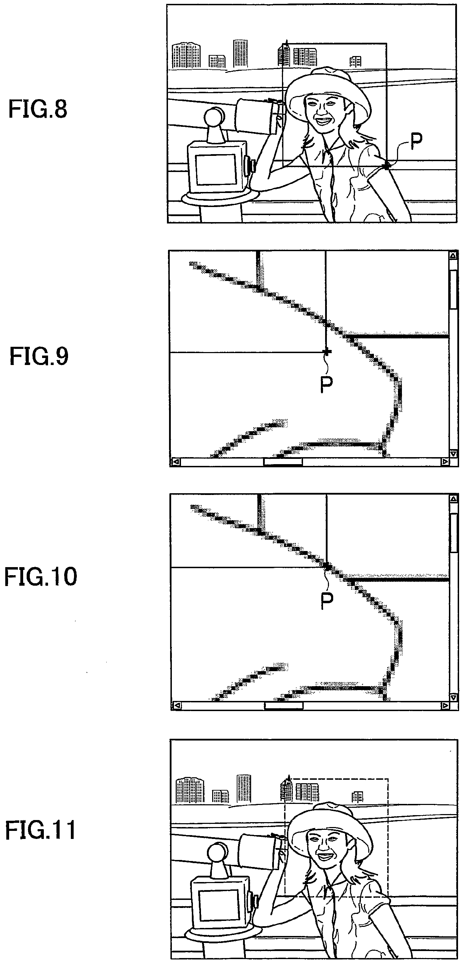

If the moving distance L of the pointer for the predetermined time t0 is a small amount of movement such as less than the predetermined threshold L0 after roughly moving the pointer as shown in Figures 5 to 8, then the target image is scaled up and displayed by a predetermined scale-up factor as shown in Figures 9 to 10. Thus, a fine adjustment can be easily made on the position coordinates of the ending point by confirming the position of the pointer in the scaled-up image. When the designation of a trimming area is released, the trimming area is determined as shown in Figure 11. If it is determined, the display of a trimming frame can be switched from a solid line tp a broken line.

As described above, in the trimming frame generating process, when a trimming area is designated by a movement of a pointer, an image is scaled up or down and displayed according to the amount of movement L in the unit time t0 of the pointer. That is, an image can be scaled up or down and displayed only by changing the amount of movement of a pointer. Especially, the image can be appropriately scaled up only by the movement of a pointer without a special additional operation, and a trimming area can be designated accurately.

To change the starting point before determining a trimming area, the starting point moving process described later is performed. The position of a determined trimming area can be freely moved without changing the size in the trimming frame moving process described later. Furthermore, in the frame size changing process described later, the size of the trimming area can be freely adjusted.

### (Starting Point Moving Process)

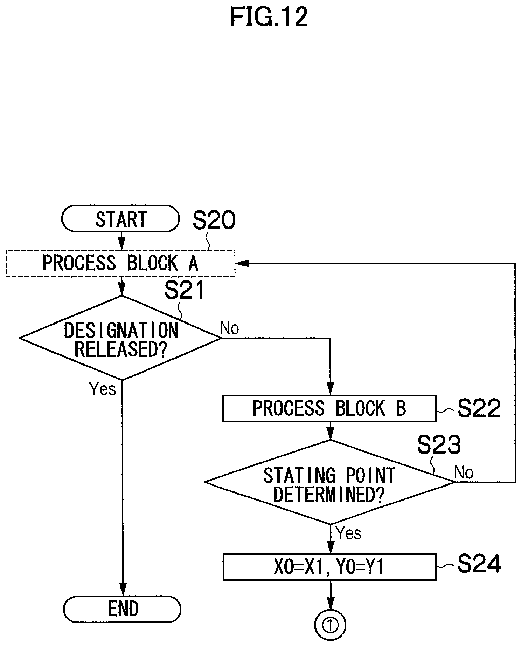

Figure 12 is a flowchart of the starting point moving process. In this process, the trimming area operation unit 43 instructs the starting point to be moved by moving the pointer, thereby moving the coordinates of the starting point. The move instruction of a starting point is issued by, for example, clicking a mouse or dragging and dropping a mouse with a predetermined key (control key, etc.) of a keyboard pressed. At this time, according to the amount of movement of a pointer in a predetermined unit time, a target image is scaled up/down and displayed by a predetermined scaling. This process is started when the move instruction for a starting point is started (for example, a mouse is clicked with the control key pressed). The start of the move instruction for a starting point is distinguished from the start of the designation of a trimming area according to whether or not a predetermined key is pressed, and the start of the trimming frame generating process does not conflict with the start of the starting point moving process.

In S20, the process block A is performed, and based on a time point and the coordinates (CX, CY) of a pointer at the time point, the coordinates (X1, Y1) of the pointer after a predetermined time t0 passes from the time point are acquired.

In S21, it is determined whether or not the designation of the movement of the pointer by the trimming area operation unit 43 has been released. The release of the designation is performed by, for example, releasing the mouse click from the state of drag and drop. When the designation is released, the process is terminated. When the designation is not released, S22 starts.

In S22, the process block B is performed, the amount of movement L of the pointer in a predetermined time t0 is calculated, and a target image is scaled up or down and displayed according to the size relationship between the amount of movement L and the threshold L0.

In S23, it is determined whether or not a determine instruction for a starting point has been issued. The determine instruction for a starting point is issued by, for example, releasing the continuous press of a predetermined key. When the determine instruction for a starting point is issued, S24 starts. When the determine instruction for a starting point is not issued, S20 starts again.

In S24, the coordinates of a starting point are replaced with the coordinates of the current pointer. That is, X0 = X1 and Y0 = Y1 are set. Then, the trimming frame generating process starts. Then, the designation of a trimming area is started.

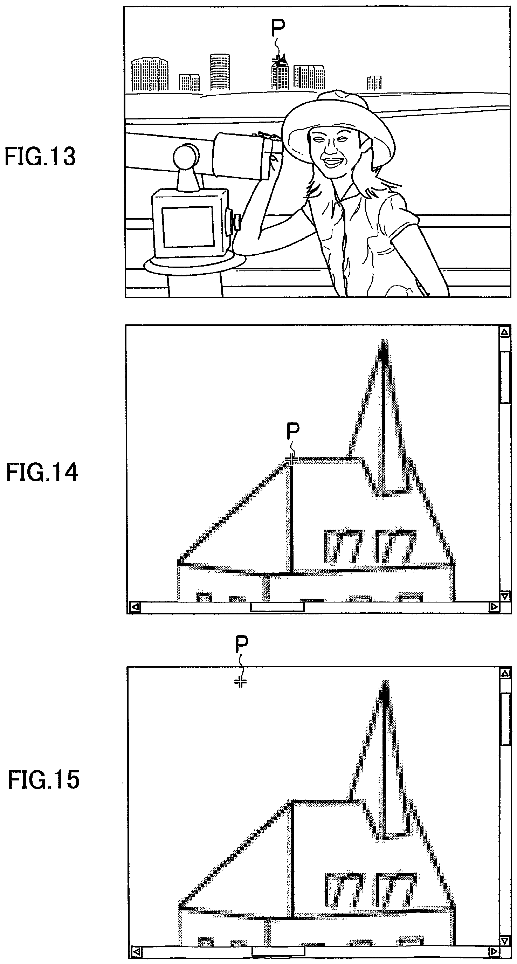

Figures 13 to 15 show a display example of a trimming frame in the above-mentioned process. As shown in Figure 13, if there is no move instruction for a pointer equal to or more than a threshold L0 for a predetermined time t0 after an designation to move the coordinates of the starting point P0 from the trimming area operation unit 43 with the state in which the starting point P0 is designated in a certain position is started by a press of a predetermined key, then a target image is scaled up by a predetermined scaling. Figure 14 shows the state in which the target image is scaled up. In this state, the coordinates of the starting point can be freely changed by dragging and dropping the mouse with the press of a predetermined key continued. Therefore, a fine adjustment can be easily made on the starting point. In Figure 15, the position of a pointer is changed from the central position of the monitor device 41 to the upper left. When the press of the predetermined key is released, the coordinates of the starting point are determined, and the designation of the trimming area can be continuously performed.

### (Trimming Frame Moving Process)

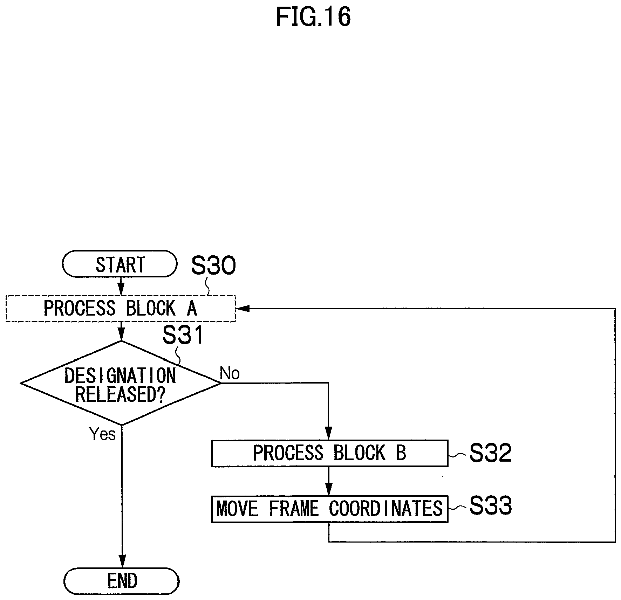

Figure 16 is a flowchart of the trimming frame moving process. In this process, a trimming frame is moved according to a move instruction for a trimming frame by the movement of a pointer designated by the trimming area operation unit 43. At this time, a target image is scaled up/down by a predetermined scaling according to the amount of movement of the trimming frame. This process is started when a move instruction for a trimming frame is started. A move instruction for a trimming frame is issued by, for example, moving the pointer to an optional position in the trimming frame, clicking the mouse, and then dragging and dropping the mouse.

In S30, the process block A is performed.

In S31, it is determined whether or not the designation of the movement of the trimming frame by the trimming area operation unit 43 has been released. Releasing the designation is performed by, for example, releasing the mouse click from the state of dragging and dropping. When the designation is released, the process terminates. If the designation has not been released, S32 starts.

In S32, the process block B is performed.

In S33, the coordinates of the starting point and the ending point are moved by the amount of movement of the pointer. Then S30 starts again.

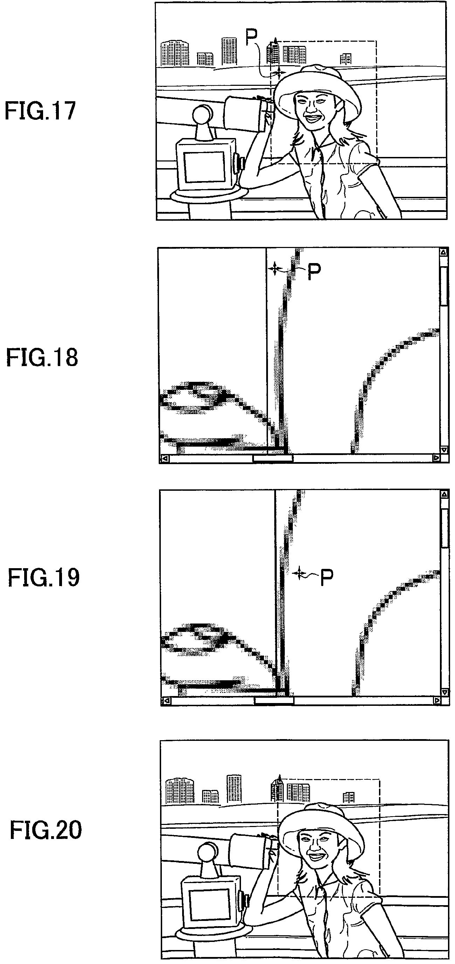

Figures 17 to 20 show display examples of trimming frames in the above-mentioned processes. As shown in Figure 17, if there is no move instruction for the pointer equal to or more than the threshold L0 for the predetermined time t0 after the move instruction for the trimming frame is issued from the trimming area operation unit 43 with a trimming area once determined, then a target image is scaled up by a predetermined scaling. Figure 18 shows the state in which the target image is scaled up. In the state in which the target image is scaled up, the trimming frame can be freely moved. Figure 19 shows the state in which the trimming frame is moved with the target image scaled up. Therefore, a fine adjustment of the movement position of the trimming frame can be easily made. If no move instruction is issued, the well-fitting display as shown in Figure 20 starts.

### (Frame Size Changing Process)

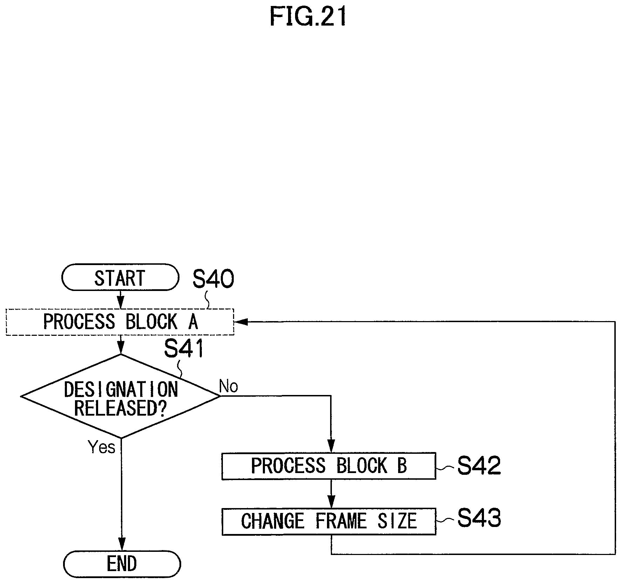

Figure 21 is a flowchart of the frame size changing process. In this process, a trimming size can be changed according to the size change instruction for the trimming area by the movement of the pointer designated by the trimming area operation unit 43. At this time, according to the amount of movement of the pointer, a target image is scaled up/down by a predetermined scaling. This process is started when a size change instruction for a trimming area is started. The size change instruction for a trimming area is issued by moving the pointer to an optional position on the upper, lower, right, and left frames forming a trimming frame, clicking the mouse, and then dragging and dropping the mouse.

In S40, the process block A is performed.

In S41, it is determined whether or not the designation of a trimming area by the trimming area operation unit 43 has been released. Releasing the designation is performed by, for example, releasing the mouse click from the state of dragging and dropping. When the designation of the trimming area is released, the process terminates. If the designation has not been released, S42 starts.

In S42, the process block B is performed.

In S43, the coordinates of the starting point or the ending point of a trimming frame are changed according to the change instruction for the size of the trimming frame from the trimming area operation unit 43. The change instruction for the size of the trimming frame can be issued by, for example, clicking an optional position on the upper, lower, right, and left frames forming a trimming frame using a mouse, dragging and dropping the mouse with the clicking held, and moving the pointer up and down or right and left. When the pointer is moved with the pointer placed on the upper frame, the y coordinate of the starting point is made to match the y coordinate of the pointer, thereby moving the coordinates of the starting point. Similarly, when the pointer is moved with the pointer placed on the lower, right, and left frames, the respective y coordinates of the ending point, the x coordinates of the ending point, the x coordinates of the starting point are made to match the coordinates of the pointer to move the coordinates of the starting point or ending point. At this time, as it is well known, the shape of the pointer can be changed from a cross shape to an arrow shape. Then, S40 starts again.

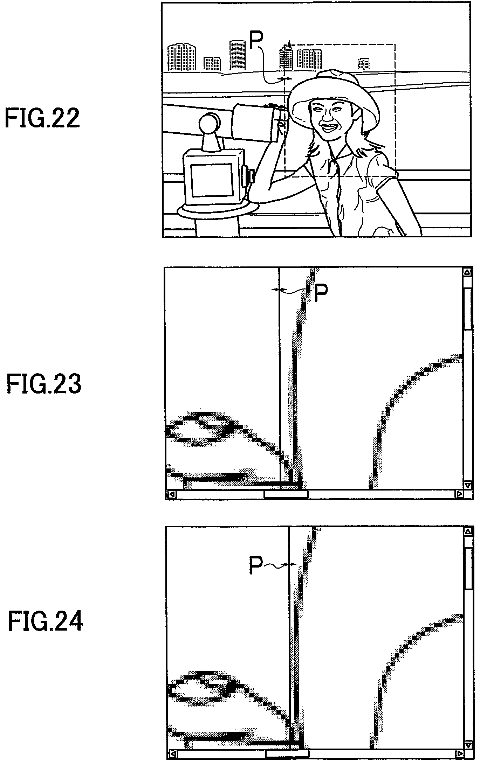

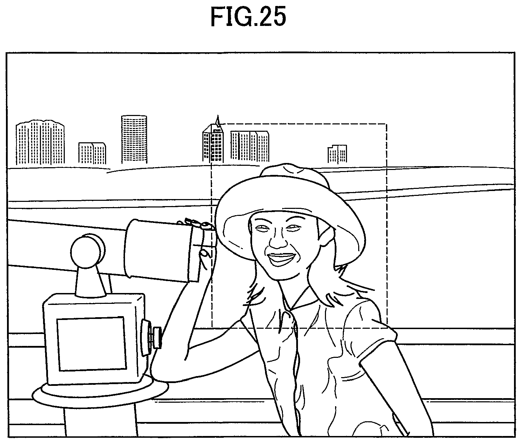

Figures 22 to 25 show display examples of trimming frames in the above-mentioned processes. As shown in Figure 22, if a move instruction for a pointer for equal to or more than a predetermined amount L0 is not issued for at least a predetermined time t0 after a change instruction for the size of the trimming frame is issued by the trimming area operation unit 43 with the trimming area once determined, a target image is scales up by a predetermined scaling. In Figure 23, the target image is scaled up. With the target image scaled up, the size of the trimming frame can be freely changed. Figure 24 shows the state in which the left frame of the trimming frame is moved to the right with the target image scaled up, and the size is reduced. Therefore, a fine adjustment of the size of the trimming area can be easily made. Unless a move instruction is issued, the well-fitting display as shown in Figure 25 starts.

### <Second Embodiment>

In the above-mentioned trimming frame generating process, a target image is scaled up/down according to the amount of movement of a trimming area, but the target image can be scaled up/down at a predetermined instruction issued during the designation of the trimming area. That is, the flow of the trimming frame generating process can be set as follows.

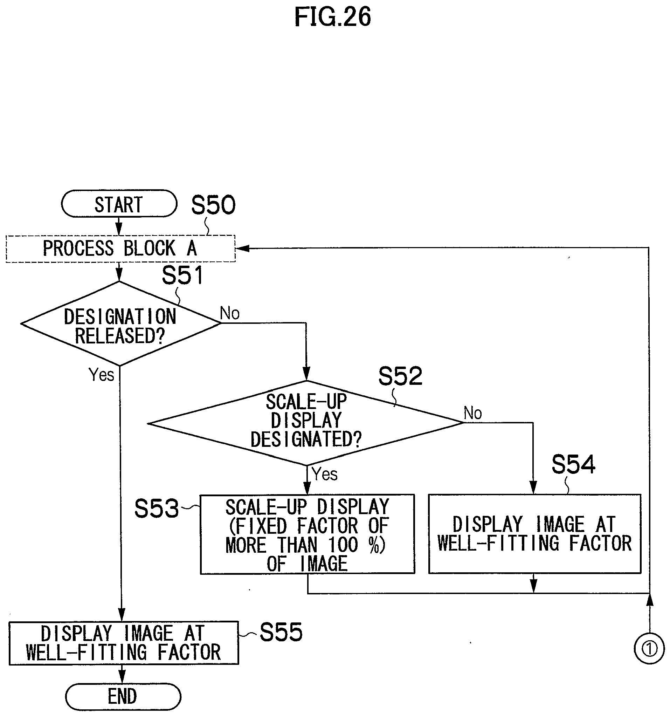

Figure 26 is a flowchart of the trimming frame generating process according to the second embodiment of the present invention.

In S50, the process block A is performed.

In S51, it is determined whether or not the designation of a trimming area by the trimming area operation unit 43 has been released. When the designation of the trimming area is released, S55 starts. If the designation has not been released, S52 starts.

In S52, it is determined whether or not a scale-up instruction for a target image by the trimming area operation unit 43 has been issued. A scale-up instruction for a target image is issued by, for example, a press of a predetermined key such as a shift key, etc. of the keyboard while dragging and dropping a mouse. When a scale-up instruction is issued, S53 starts. If no scale-up instruction is issued, S54 starts.

In S53, a target image is scaled up and displayed by a predetermined scale-up factor. The predetermined scale-up factor is a fixed factor higher than 100 %. Then, S50 starts again.

In S54, after performing well-fitting display, S50 starts again.

In S55, a target image is displayed so as to fill the entire screen.

As in the process above, a target image can be scaled up by pressing a predetermined key during the designation of a trimming area.

In the above-mentioned embodiment, examples are described in which the invention is applied to an information processing device, but the application of the present invention is not limited to it, but can also be applied to a digital camera, etc. for recording a still image. That is, by storing a program for executing the above-mentioned trimming frame generating process, starting point moving process, trimming frame moving process, and frame size changing process in a computer-readable storage medium such as semiconductor memory, etc., the processes can be appropriately read and executed by various devices including arithmetic processing means such as a CPU, a MCU, etc.

### <Third Embodiment>

In the first and second embodiments scale-up display or well-fitting display is selectively performed. In addition, scale-up display, scale-down display, and well-fitting display can coexist with a normal display having no scaling changes on the same screen.

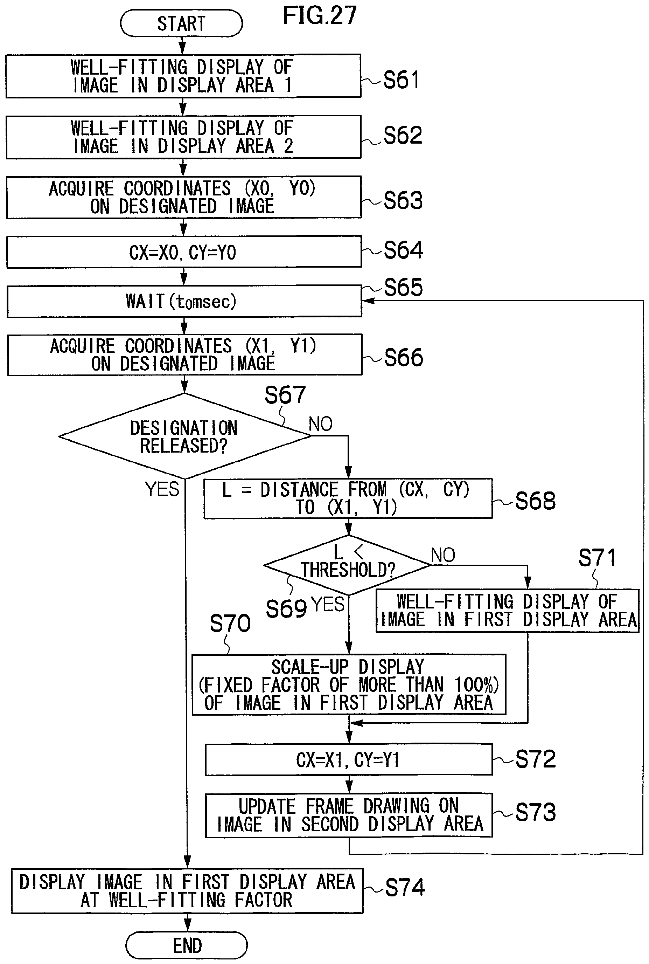

Figure 27 is a flowchart of the trimming frame generating process according to the third embodiment of the present invention.

In S61, an image is displayed so as to fill a first display area 41a provided on the operation screen of the monitor device 41. Then, in S62, the image is displayed so as to fill a second display area 41b which does not overlap with the first display area 41a.

In S63, the image processing unit 40 acquires the coordinates (X0, Y0) of the starting point P0 designated in the manual operation of the trimming area operation unit 43.

In S64, CX = X0 and CY = Y0 are set.

In S65, the designation of an ending point is started by a continuous movement of a pointer. While the designation of the ending point continues, the passage of a predetermined time t0 is repeatedly counted.

In S66, the image processing unit 40 acquires the coordinates (X1, Y1) of the position P1 of the current pointer at the time point where the predetermined time t0 has passed from the time point of CX = X0, CY = Y0.

In S67, it is determined whether or not the designation of a trimming area by the trimming area operation unit 43 has been released. If the designation of the trimming area has been released, S74 starts. If the designation has not been released, S68 starts.

In S68, the distance L from (CX, CY) to (X1, Y1), that is, the amount of movement of the pointer in a predetermined time t0, is calculated.

In S69, it is determined whether or not the amount of movement of the pointer in the predetermined unit time t0 is less than a predetermined amount. The determination is made by determining, for example, whether or not the distance L is less than a predetermined threshold L0. If the amount of movement of the pointer is less than the predetermined amount, S70 starts. If the amount of movement of the printer is equal to or more than the predetermined amount, S71 starts.

In S70, the target image in the first display area 41a is scaled up and displayed by a predetermined scale-up factor. The predetermined scale-up factor is a fixed factor over 100 %.

In S71, the target image is displayed so as to fill the first display area 41a of the monitor device 41 (well-fitting display).

In S72, CX = X1 and CY = Y1 are set.

In S73, trimming frames as sides of a rectangle defined by a starting point P0 and an ending point P1 as cater-cornered points in the second display area 41b of the monitor device 41 are drawn. If the trimming frames have been drawn, the drawings are updated based on the new ending point position. Then, S65 starts again, and the processes of calculating an amount of movement L of the pointer in a predetermined time t0, and scaling up or down and displaying the target image according to the size relationship between the amount of movement L and the threshold L0 is repeated.

In S74, the target image is displayed so as to fill the first display area 41a of the monitor device 41, thereby the process terminates.

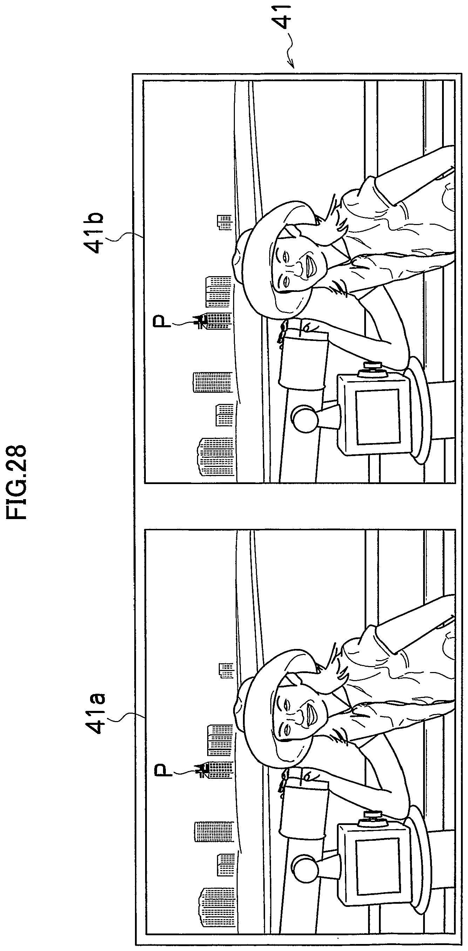

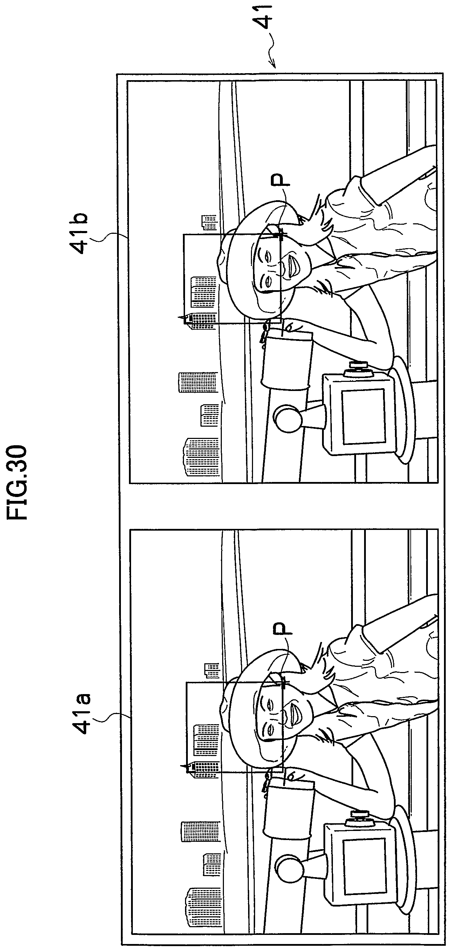

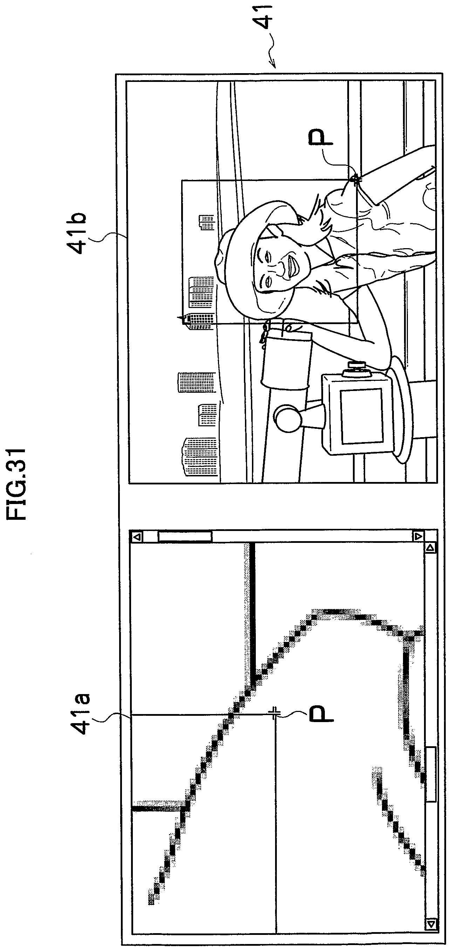

Figures 28 to 32 show the process of increasing or decreasing the display scaling according to the amount of movement of the pointer in the above-mentioned processes.

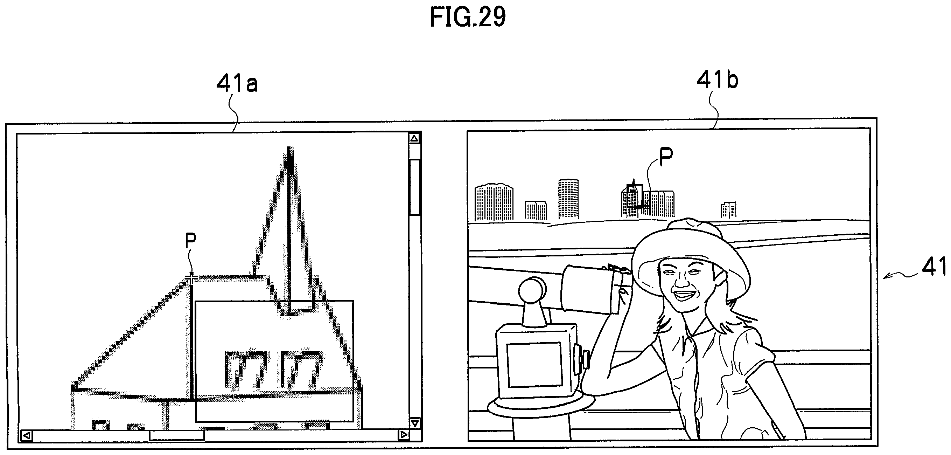

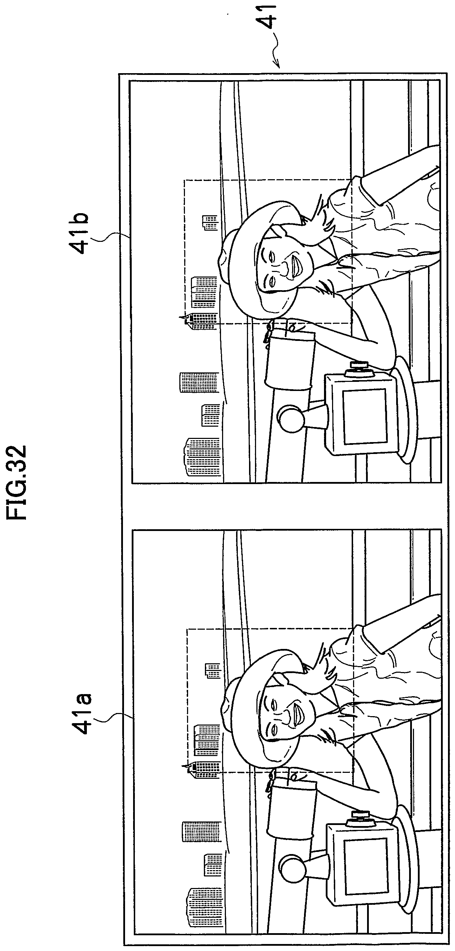

That is, after designating the starting point P0 by the pointer (Figure 28), the pointer moves toward a desired ending point position P1, and according to the change of the amount of movement of the pointer per unit time t0, the scale-up factor of the target image in the first display area 41a increases (Figures 29 to 31). However, in the second display area 41b, the target image is displayed as fixed with the scale-up factor constantly fixed to 1, and the drawings of the trimming frame are updated according to the movement of the pointer. If the position of the pointer reaches a desired position, the target image is displayed so as to fill the first display area 41a (Figure 32).

Thus, the rough and accurate positions of the pointer of the target image can be simultaneously and therefore conveniently confirmed.

### <Fourth Embodiment>

In the first to third embodiments, the scaling is fixed to one value, but a few levels of display scaling factors can be prepared to switch among the plural levels of display scaling factors according to the amount of movement of the pointer.

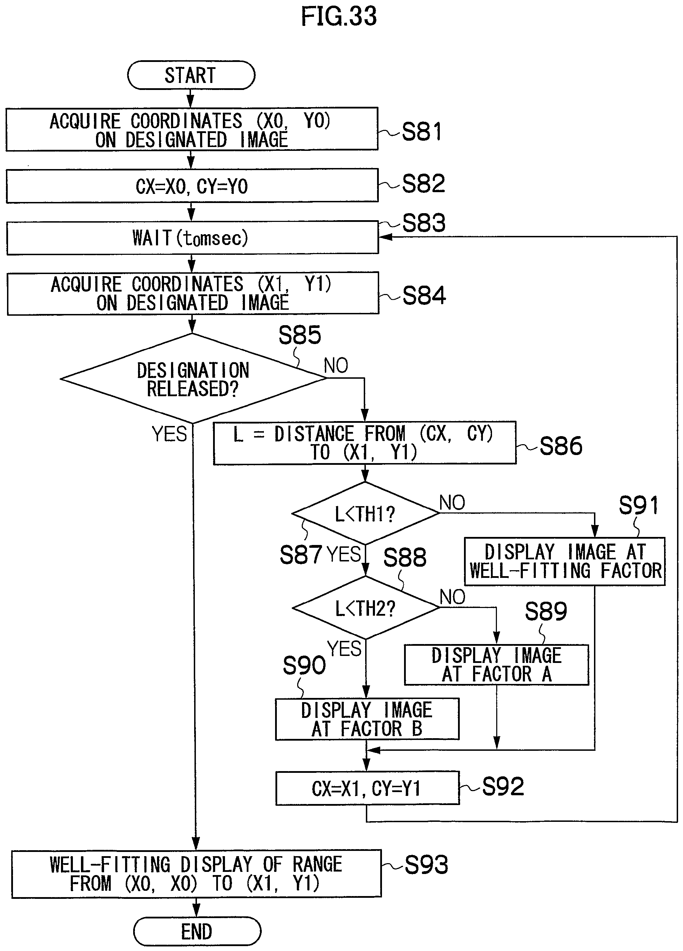

Figure 33 is a flowchart of the trimming frame generating process according to the fourth embodiment.

In S81, the image processing unit 40 acquires the coordinates (X0, Y0) of the starting point P0 designated in the manual operation of the trimming area operation unit 43.

In S82, CX = X0 and CY = Y0 are set.

In S83, the designation of the ending point is started by the continuous movement of the pointer. While the designation of the ending point continues, the passage of the predetermined time t0 is repeatedly counted.

In S84, the image processing unit 40 acquires the coordinates (X1, Y1) of the position P1 of the current pointer at the time point where a predetermined time t0 passed from the time when CX = X0 and CY = Y0 are set.

The processes in steps S81 to S84 are the same as the process block A according to the first embodiment, the starting point P0 is directed by the mouse click, and the ending point is designated by dragging and dropping the mouse with the click held.

In S85, it is determined whether or not the designation of the trimming area by the trimming area operation unit 43 has been released. When the designation of the trimming area is released, S93 starts. If the designation has not been released, S86 starts.

In S86, the distance L from (CX, CY) to (X1, Y1), that is, the amount of movement of the pointer in a predetermined time t0 is calculated.

In S87, it is determined whether or not the amount of movement of the pointer in the predetermined unit time t0 is less than a predetermined first threshold TH1. If the amount of movement of the pointer is less than the first threshold TH1, S68 starts. If the amount of movement of the pointer is equal to or more than the first threshold TH1, S91 starts.

In S88, it is further determined whether or not the amount of movement of the pointer in the predetermined unit time t0 is less than a predetermined second threshold TH2. If the amount of movement of the pointer is less than the second threshold TH2, S89 starts. If the amount of movement of the pointer is equal to or more than the second threshold TH2, S90 starts.

In S89, the target image is scaled up and displayed by a predetermined first scale-up factor A. The predetermined scale-up factor is a fixed factor over 100 %.

In S90, the target image is scaled up and displayed by a predetermined second scale-up factor B. The predetermined scale-up factor is a fixed factor over 100 %, and more than the first scale-up factor A.

In S91, the target image is displayed so as to fit well.

In S92, CX = X1 and CY = Y1 are set. Then, S83 starts again, and the process of calculating the amount of movement L of the pointer in the predetermined time t0, and changing the display scaling of the target image according to the amount of movement L and the threshold L0 is repeated.

In S93, the target image is displayed so as to fill the entire screen, thereby terminating the process.

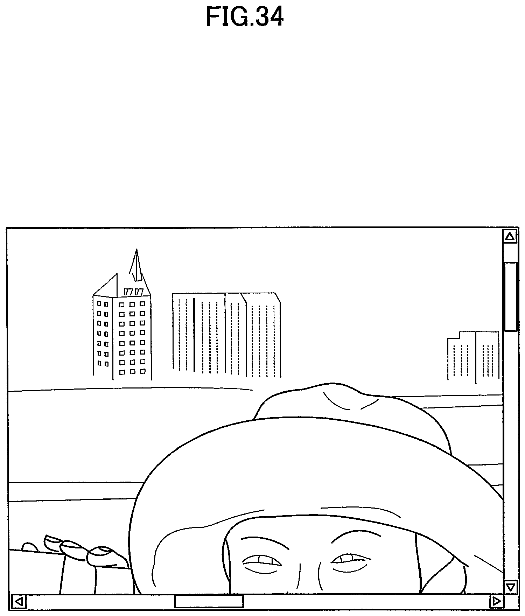

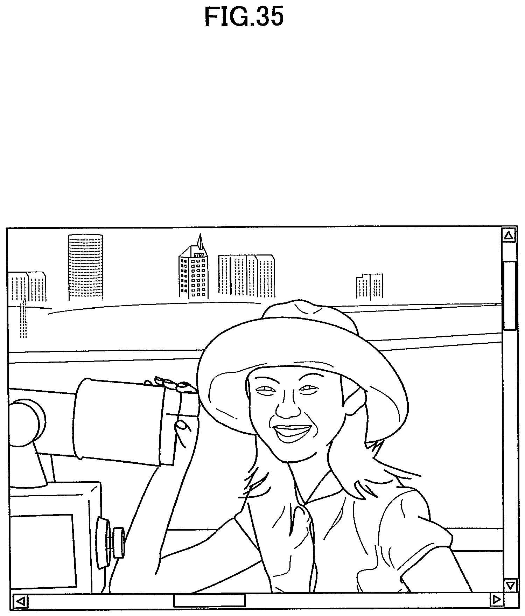

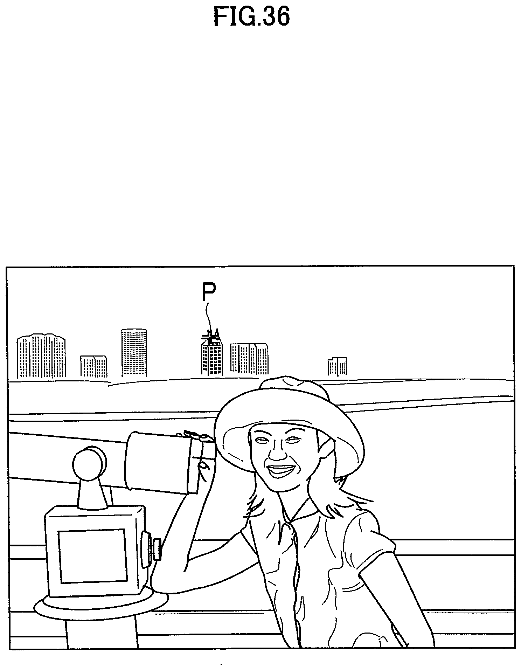

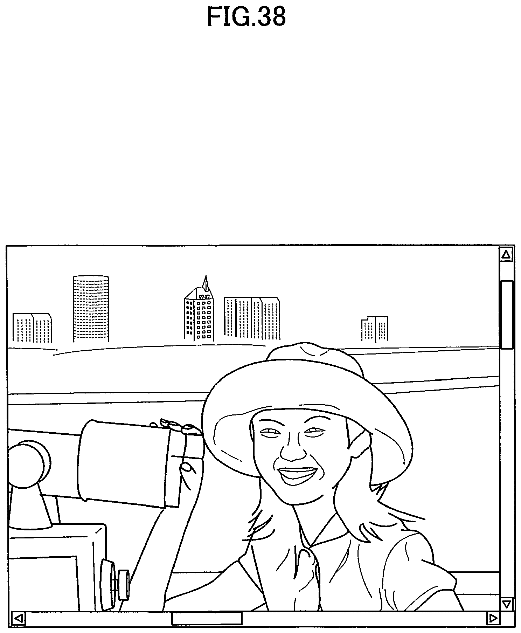

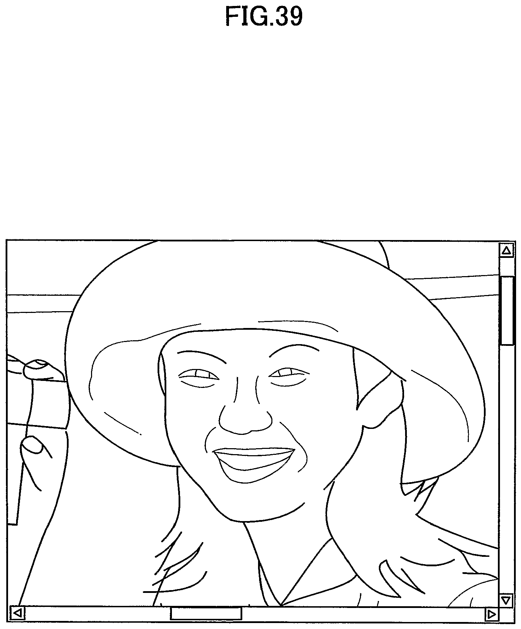

Figures 34 to 40 show the process of changing the display scaling according to the amount of movement of the pointer.

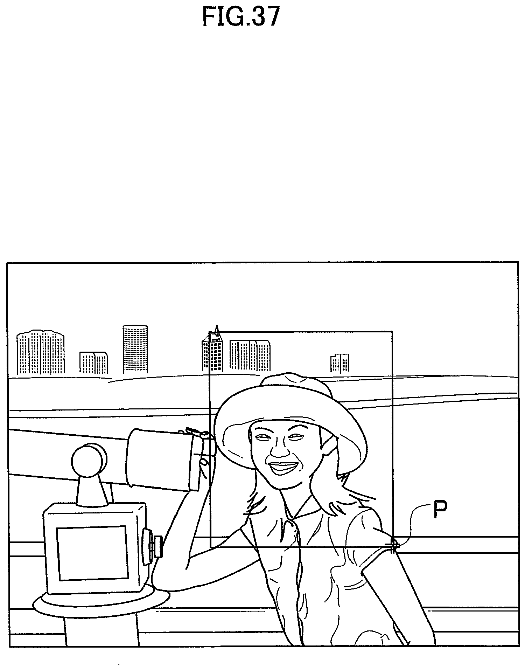

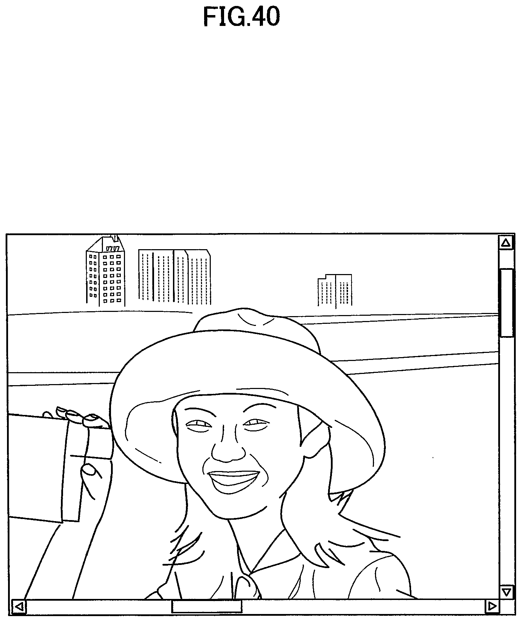

That is, after the starting point P0 is designated by the pointer, the pointer is moved toward a desired ending point position P1. With an increasing amount of movement, the scale-up factor of the target image decreased from B to A to 1 (without scale- up or down) (Figures 34 to 36). On the other hand, when the pointer position is reaching the first desired position, the amount of movement of the pointer gradually decreases, and the display scaling correspondingly increases from 1 to A to B (Figures 37 to 39). Thus, the detailed portion can be easily confirmed, and the desired ending point position P1 can be correctly determined. By releasing click, the image in the selected trimming area is displayed so as to fill the entire screen (Figure 40).

Thus, since the scale-up factor of an image is changed according to the amount of movement of a pointer in a predetermined time in the present embodiment, the unnatural image obtained as a result of a sudden change of the factor can be reduced.

### <Fifth Embodiment>

In the first to fourth embodiments of the present invention, a scaling is changed for a larger value if the amount of movement of the pointer is less than a predetermined threshold. Therefore, unless the pointer is moved with the mouse click held, the scaling is increased only once. However, when the pointer is not moved with the mouse click held, the scaling can be gradually increased according to the time in which the pointer is not moved.

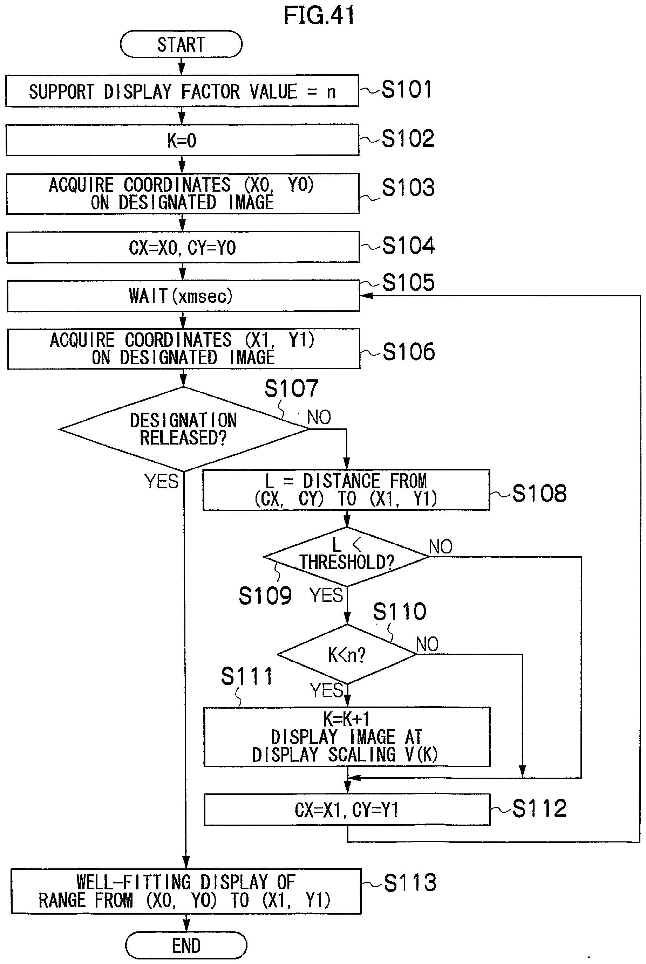

Figure 41 is a flowchart of the trimming frame generating process according to the fifth embodiment of the present invention.

In S101, in plural stepwise set scale-up factors, the designation of the number n (referred to as a support designation factor value) designating the largest factor (referred to as a support factor) in the factors stepwise changing according to the time in which the pointer does not move is accepted.

In S102, the number K (referred to as a current designated factor value) designating a stepwise set scale-up factor is set to 0. The stepwise set scale-up factor is defined in advance such that it can be stepwise increased with an increasing current designated factor value. That is, it is defined as V(0) < V(1) < V(2) < .. V(K-1) < V(K) < V(K + 1) < .. in advance.

In S103, the image processing unit 40 acquires the coordinates (X0, Y0) of the starting point P0 designated in the manual operation of the trimming area operation unit 43.

In S104, CX = X0 and CY = Y0 are set.

In S105, the designation of the ending point is started by continuously moving the pointer. While the designation of the ending point continues, the passage of the predetermined time t0 is repeatedly counted.

In S106, the image processing unit 40 acquires the coordinates (X1, Y1) of the position P1 of the current pointer at the time point where a predetermined time t0 passed from the time when CX = X1 and CY = Y1 are set.

In S107, it is determined whether or not the designation of the trimming area by the trimming area operation unit 43 has been released. When the designation of the trimming area is released, S113 starts. If the designation has not been released, S108 starts.

In S108, the distance L from (CX, CY) to (X1, Y1), that is, the amount of movement of the pointer in a predetermined time t0 is calculated.

In S109, it is further determined whether or not the amount of movement of the pointer in the predetermined unit time t0 is less than a predetermined amount L. If the amount of movement of the pointer is less than the predetermined amount L, S110 smarts. If the amount of movement of the pointer is equal to or more than the predetermined amount, S112 starts.

In S110, it is determined whether or not the current designated factor value is less than a support designation factor value, that is, K < n. If K < n, S111 starts. If K < n does not hold, S112 starts.

In S111, K is incremented (K = K + 1), and the scale-up factor V(K) of the target image is newly set.

In S112, CX = X1 and CY = Y1 are set. Then, S105 starts again, and the process of calculating the amount of movement L of the pointer in the predetermined time t0, and increasing or decreasing of the target image according to the amount of movement L and the threshold L0 is repeated.

In S113, the trimming area of the target image is displayed so as to fill the entire screen, thereby terminating the process.

In this process, if the amount of movement L of the pointer in the predetermined time t0 is less than the threshold L0, the scaling gradually increases from V(1), V(2), ... Therefore, the scaling stepwise changes up to the possible scaling, and it is not necessary to designate the change of the factor. Therefore, it is very convenient.

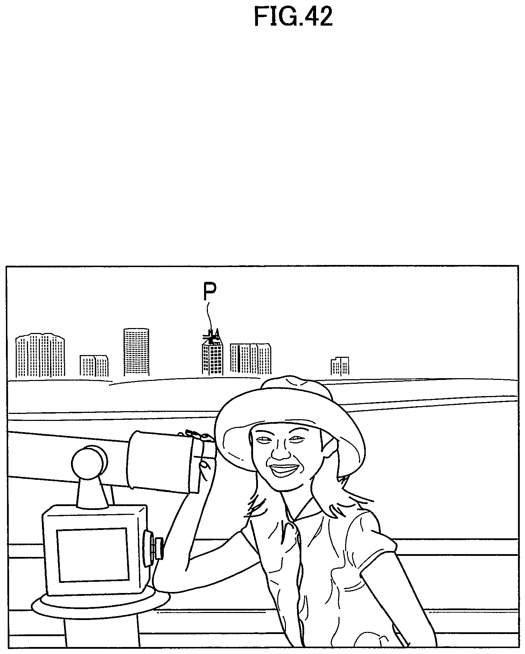

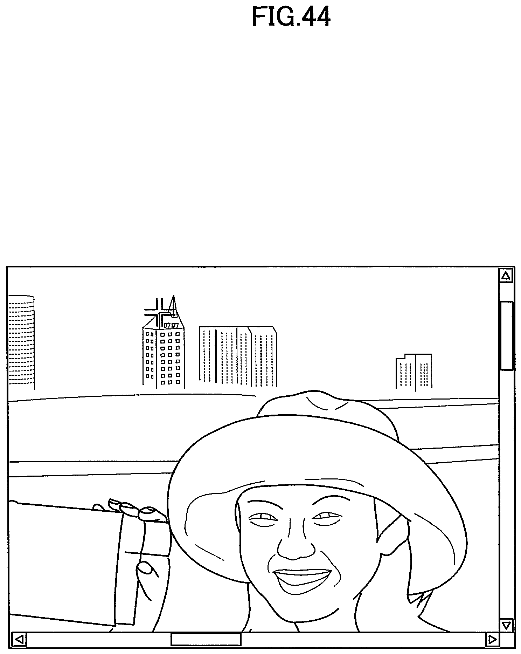

Figures 42 to 47 show the state in which the display scaling changed according to the amount of movement of a pointer.

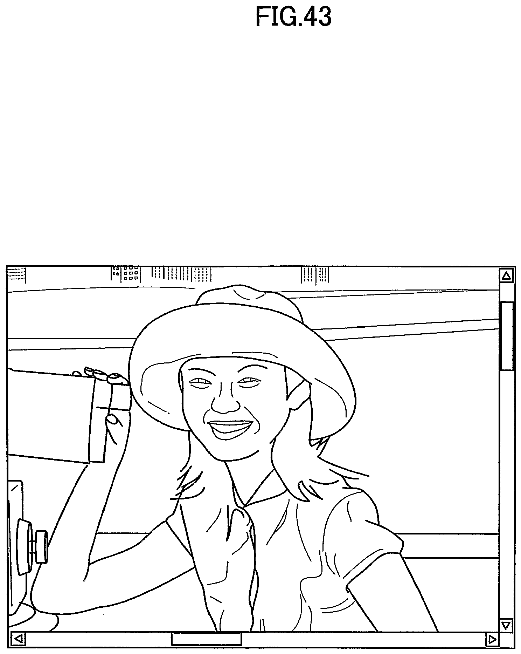

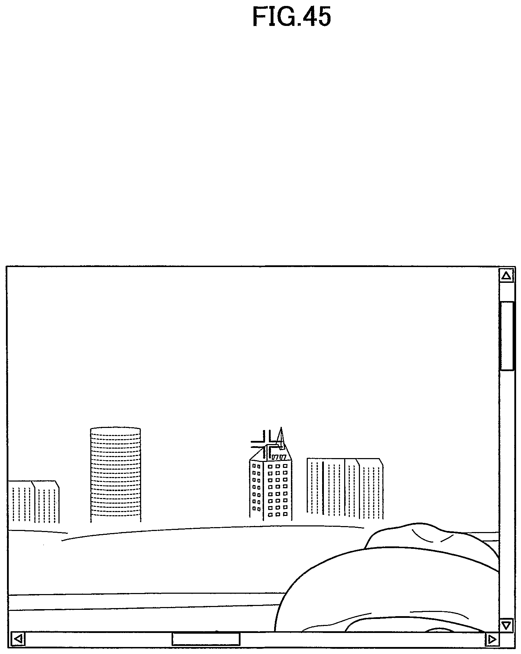

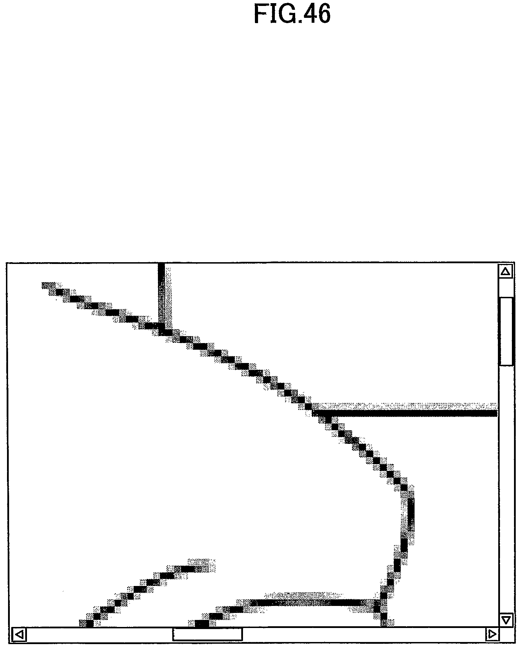

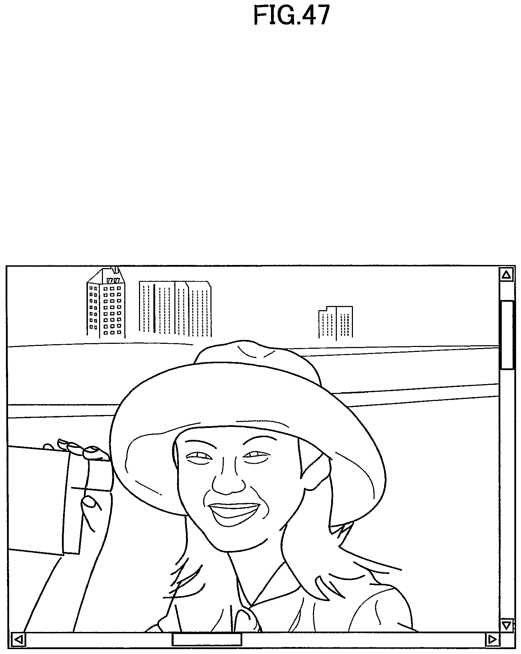

That is, although the pointer is not moved at all with the click held after the starting point P0 is designated by the pointer (Figure 42), the display scaling is switched from V(0) to V(1) to V(2) (Figures 43 to 44). Although the amount of movement L of the pointer in the predetermined time t0 exceeds the threshold L0, the display scaling does not change, and the trimming area changes only (Figure 45). As the ending point P1 is reached, the amount of movement L of the pointer in the predetermined time t0 gradually decreases, and when it is less than the threshold L0, the display scaling is switched from V(2) to V(3) (Figure 46). When the click is released, the partial image in the trimming area defined by the designated starting point P0 and ending point P1 as cater-cornered points is displayed so as to fill the entire screen (Figure 47).

Thus, by keeping the amount of movement at less than the threshold L0 in the predetermined time with the click held, the display scaling can be gradually increased, and the ending point P1 can be correctly positioned while checking the details.

### <Sixth Embodiment>

In the fifth embodiment, although the amount of movement of the pointer exceeds a predetermined threshold, the scaling does not change. However, when the amount of movement of the pointer exceeds a predetermined threshold, well-fitting display may immediately start.

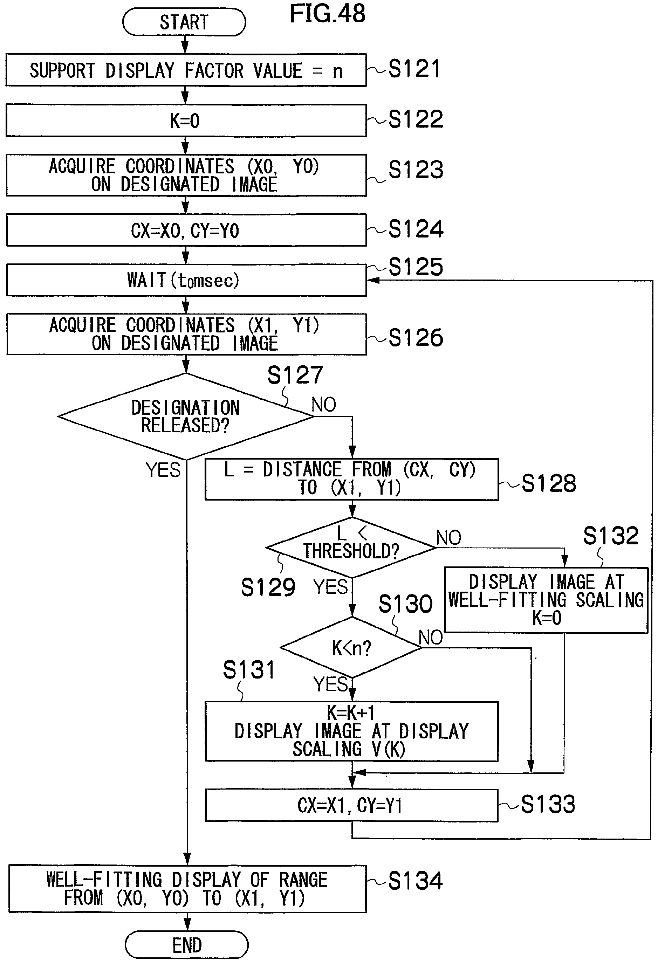

Figure 48 is a flowchart of the trimming frame generating process according to the sixth embodiment.

First, in S121, in plural stepwise set scale-up factors, the designation of the number n (referred to as a support display factor value) designating the largest factor (referred to as a support factor) in the factors stepwise changing according to the time in which the pointer moves is accepted.

In S122, the number K (referred to as a current display factor value) designating a stepwise set scale-up factor is set to 0. The stepwise set scale-up factor is defined as V(0) < V(1) < V(2) < .. V(K-1) < V(K) < V(K + 1) < .. as in the fifth embodiment.

In S123, the image processing unit 40 acquires the coordinates (X0, Y0) of the starting point P0 designated in the manual operation of the trimming area operation unit 43.

In S124, CX = X0 and CY = Y0 are set.

In S125, the designation of the ending point is started by continuously moving the pointer. While the designation of the ending point continues, the passage of the predetermined time t0 is repeatedly counted.

In S126, the image processing unit 40 acquires the coordinates (X1, Y1) of the position P1 of the current pointer at the time point where a predetermined time t0 passed from the time when CX = X1 and CY = Y1 are set.

In S127, it is determined whether or not the designation of the trimming area by the trimming area operation unit 43 has been released. When the designation of the trimming area is released, S134 starts. If the designation has not been released, S128 starts.

In S128, the distance L from (CX, CY) to (X1, Y1), that is, the amount of , movement of the pointer in a predetermined time t0 is calculated.

In S129, it is further determined whether or not the amount of movement of the pointer in the predetermined unit time t0 is less than a predetermined threshold. If the amount of movement of the pointer is less than the predetermined threshold, S130 starts. If the amount of movement of the pointer is equal to or more than the predetermined threshold, S132 starts.

In S130, it is determined whether or not the current display factor value K is less than a support display factor n. If K < n, S131 starts. If K < n does not hold, S133 starts.

In S131, K is incremented (K = K + 1), and the scale-up factor V(K) of the target image is newly set.

In S132, K = 0, and well-fitting display is performed.

In S133, CX = X1 and CY = Y1 are set. Then, S125 starts again, and the process of calculating the amount of movement L of the pointer in the predetermined time t0, and increasing or decreasing of the target image according to the amount of movement L and the threshold L0 is repeated.

In S134, the trimming area of the target image defined by the starting point P0 and the current pointer position P1 as cater-cornered points is displayed so as to fill the entire screen, thereby terminating the process.

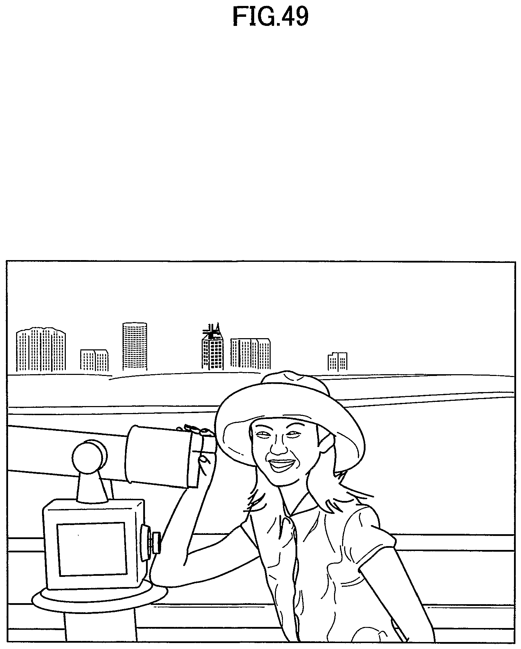

Figures 49 to 56 show the state in which the display scaling changed according to the amount of movement of a pointer. In this example, the support display factor n is 2 (n = 2).

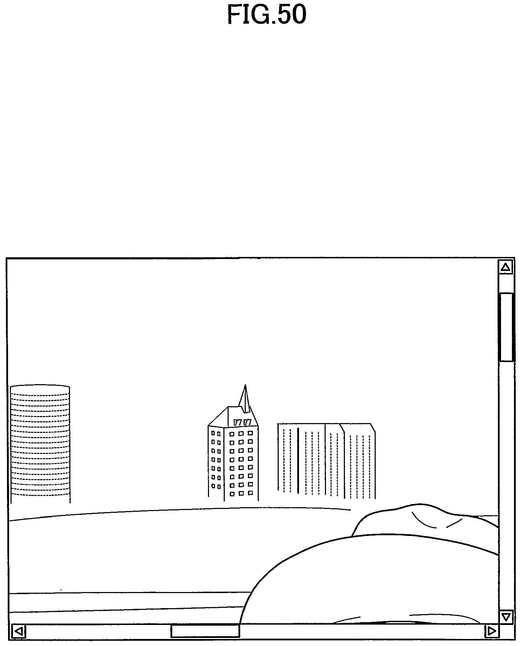

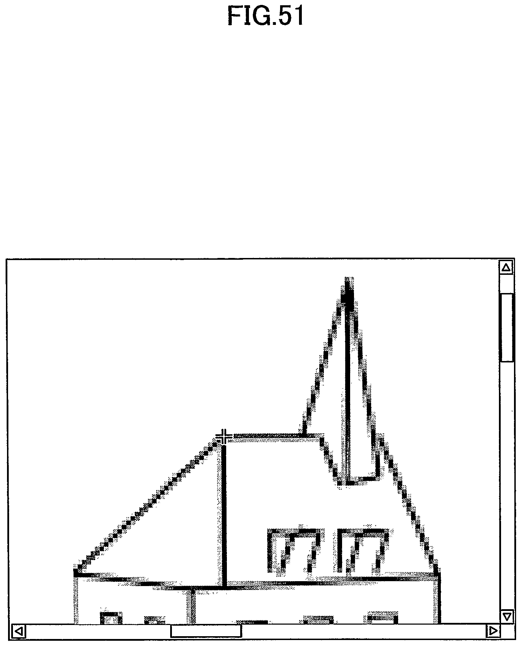

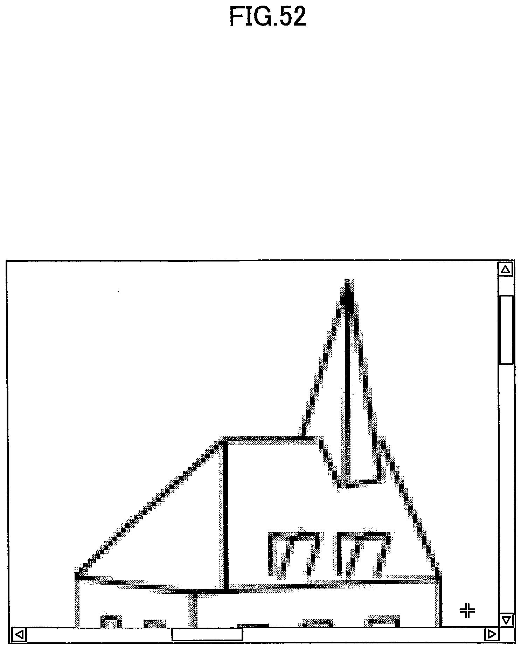

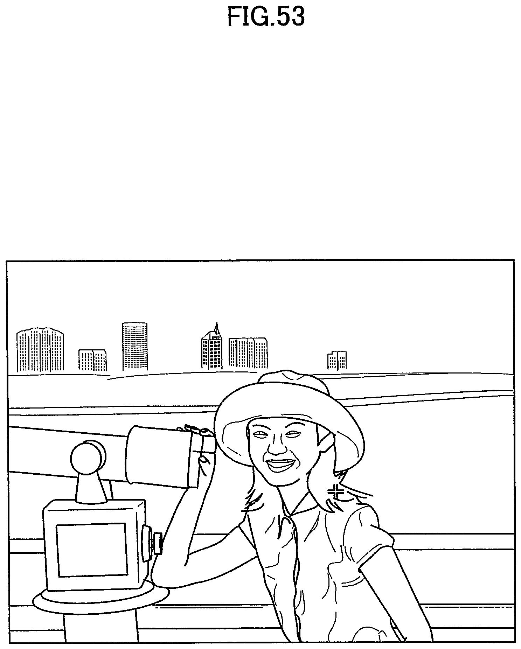

That is, although the pointer is not moved at all with the click held after the starting point P0 is designated by the pointer (Figure 49), the display scaling is stepwise increased from V(0) to V(1) to V(2) (Figures 50 and 51). If the amount of movement L of the pointer in the predetermined time t0 is less than the threshold L0, the display scaling does not change, and only the trimming area changes (Figure 52). If the amount of movement L of the pointer in the predetermined time t0 exceeds the threshold L0, well-fitting display is performed (Figure 53).

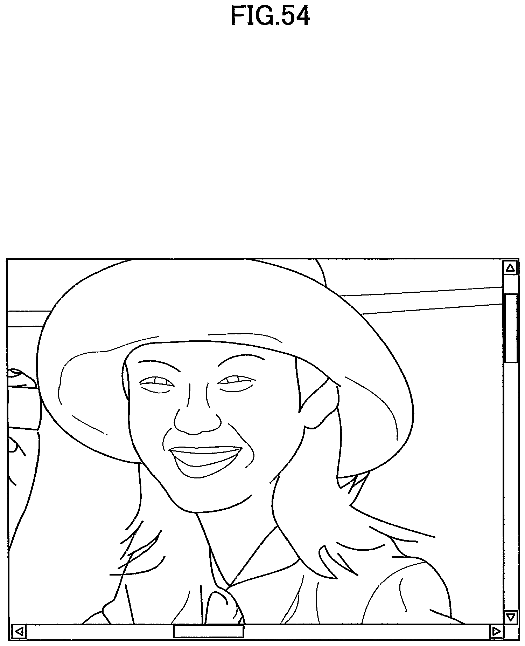

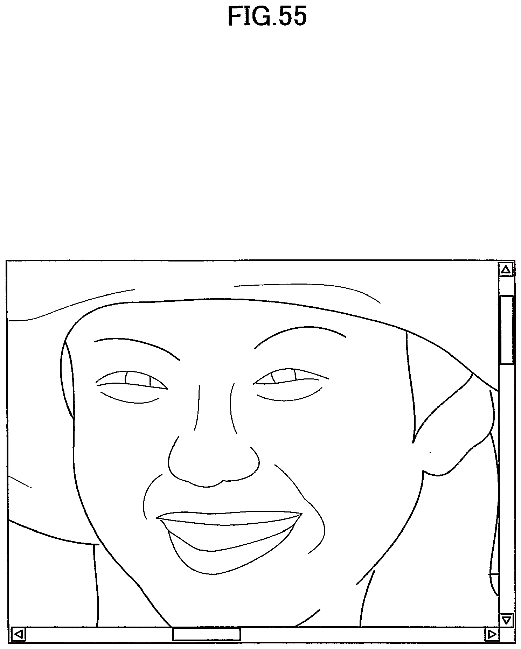

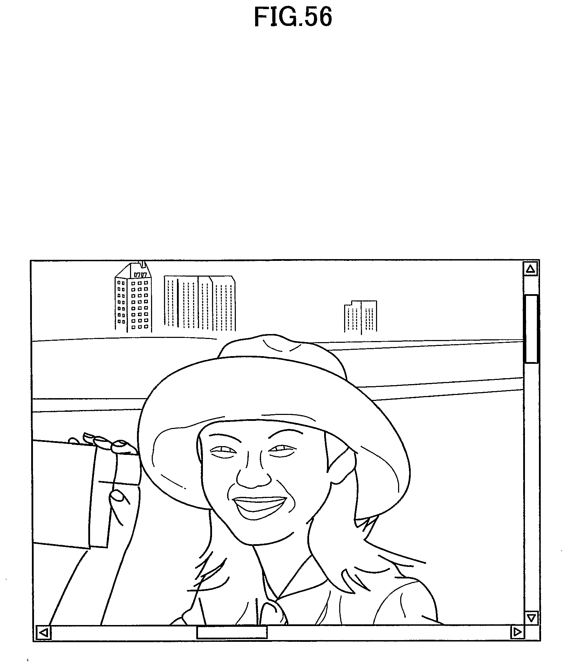

As the position of the pointer approaches the target ending point P1, the amount of movement L of the pointer in the predetermined time t0 is gradually decreased, and when it is lower than the threshold L0, the display scaling stepwise increases from V(0) to V(1) to V(2) (Figures 54 and 55). When the click is released, the partial image in the trimming area defined by the designated starting point P0 and the ending point P1 as cater-cornered points is displayed so as to fill the entire screen (Figure 56).

Thus, by keeping the amount of movement at less than the threshold L0 in the predetermined time with the click held, the display scaling can be gradually increased, and the ending point P1 can be correctly positioned while checking the details. Since the scaling up and down can be performed according to the amount of movement, the scaling can be changed as necessary, and is more convenient than in the fifth embodiment of the present invention.

### <Seventh Embodiment>

In the first to sixth embodiments, an example of assuming the designation of a trimming area of a target image is explained. However, the present invention can be applied to various editing operations on the screen. That is, in the above-mentioned embodiments, the target image can be replaced with various edit targets (objects) displayed on the screen such as a character, a numeric, a pattern, an icon, etc.

Assume that the present invention is applied to edit operation on word processing software on a screen where characters is inputted, deleted, or changed.

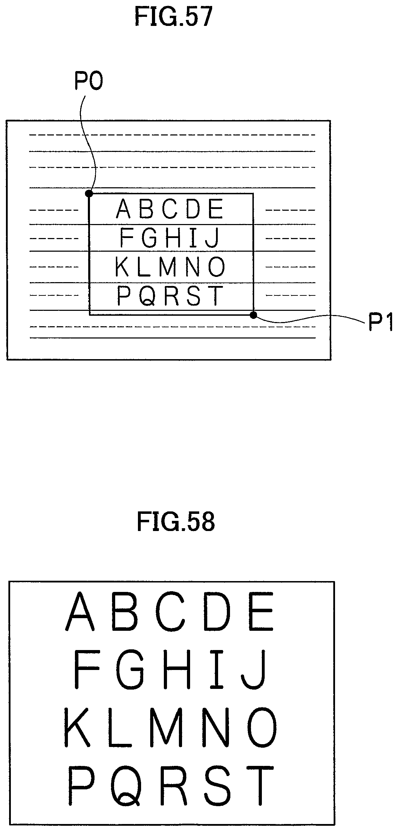

As shown in Figure 57, on the word processing input screen, it is assumed that desired starting point P0 and ending point P1 are designated by the pointer of the mouse. By the scaling according to the amount of movement of the pointer in the predetermined time t0, characters on the screen can be put on scale-up display, scale-down display, or well-fitting display. Figure 58 shows an example of a screen displaying part of characters in a rectangular area defined by two cater-cornered points i.e. the starting point P0 and the ending point P1 of Fig. 57 so as to be filled with the characters. Although not shown in the attached drawings, a target image can be stepwise scaled up and displayed by the scaling V(K) as in the fifth embodiment of the present invention.

The present invention can be applied to various desktop edit software such as spreadsheet software, presentation software, etc. In any case, an edit target is not limited to an image, and an edit purpose is not limited to image trimming.

## Claims

1. A screen edit apparatus (43), comprising:
a designation unit for designating a starting point and an ending point being cater-cornered points of an edit frame as a determination criteria of a desired edit area for a desired edit target on a screen by a movement of a pointer on a displayed image;
a calculation unit for calculating an amount of movement of the pointer in a predetermined unit time while the designation of the cater-cornered points continues, wherein designation of the ending point starts when the pointer moves; and
a display control unit for changing a display scaling of the edit target according to the amount of movement of the pointer in the predetermined unit time, and displaying the edit target on a display device.

2. The screen edit apparatus according to claim 1, wherein the display control unit scales up and displays the edit target by a predetermined scale-up factor when the amount of movement of the pointer in the predetermined unit time is less than a predetermined amount.

3. The screen edit apparatus according to claim 2, wherein the display control unit scales down and displays the edit target by a predetermined scale-down factor when the designation of the cater-cornered points is released.

4. The screen edit apparatus according to claim 3, wherein the predetermined scale-down factor is a factor for display of the edit target so as to fill a display area of the display device.

5. The screen edit apparatus according to any of claims 1 to 4, wherein the display control unit displays an edit frame indicating an edge of the edit area on the display device.

6. The screen edit apparatus according to claim 5, wherein:
the designation unit designates a movement of the cater-cornered points of the edit frame by the movement of the pointer;
the calculation unit calculates the amount of movement of the pointer in the predetermined unit time while the designation of the movement of the cater-cornered points continues; and
the display control unit scales up or scales down the edit target according to the amount of movement of the pointer in the predetermined unit time and displays the edit target on the display device.

7. The screen edit apparatus according to claim 6, wherein the display control unit moves and displays the cater-cornered points according to the designation of the movement of the cater-cornered points.

8. The screen edit apparatus according to claim 5, wherein:
the designation unit designates the movement of the edit frame by the movement of the pointer;
the calculation unit calculates the amount of movement of the pointer in the predetermined unit time while the designation of the movement of the edit frame continues; and
the display control unit scales up or scales down the edit target according to the amount of movement of the pointer in the predetermined unit time, and displays the edit target on the display device.

9. The screen edit apparatus according to claim 8, wherein the display control unit moves and displays the edit frame according to the designation of the movement of the edit frame.

10. The screen edit apparatus according to claim 5, wherein the designation unit designates a size change of the edit frame by the movement of the pointer;
the calculation unit calculates the amount of movement of the pointer in the predetermined unit time while the designation of the size change of the edit frame continues; and
the display control unit scales up or scales down the edit target according to the amount of movement of the pointer in the predetermined unit time, and displays the edit target on the display device.

11. The screen edit apparatus according to claim 10, wherein the display control unit changes the size of the edit frame according to the designation of the size change of the edit frame and displays the edit target.

12. The screen edit apparatus according to claim 1, wherein according to a size relationship between predetermined plural stepwise thresholds and the amount of movement of the pointer in the predetermined unit time, the display control unit switches a display scaling of the edit target to any of predetermined plural stepwise factors corresponding to the size relationship, and displays the edit target on the display device.

13. The screen edit apparatus according to claim 12, wherein the display control unit changes a display scaling such that a part of the edit target enclosed by the edit frame can be adapted to the area of the display device when the designation of the cater-cornered points is released, and then displays the edit target.

14. The screen edit apparatus according to claim 1, wherein the display control unit stepwise changes the display scaling of the edit target according to the amount of movement of the pointer in the predetermined time being less than a predetermined amount, and displays the edit target.

15. The screen edit apparatus according to claim 14, wherein the display control unit maintains a current display scaling according to the amount of movement of the pointer in the predetermined unit time being a predetermined amount or more, and displays the edit target.

16. The screen edit apparatus according to claim 14, wherein the display control unit changes the display scaling of the edit target to a display scaling adapted to the display area of the display device according to the amount of movement of the pointer in the predetermined unit time being the predetermined amount or more, and displays the edit target.

17. The screen edit apparatus according to any of claims 1 to 16, wherein the display control unit scales up or scales down the edit target in a predetermined first display area of the display device according to the amount of movement of the pointer in the predetermined unit time, and displays the edit target, and displays an entire edit target in a predetermined second display area of the display device.

18. A computer implemented method for screen editing, comprising the steps of:
designating (S1, S2, S3, S4, S5) a starting point and an ending point being cater-cornered points of an edit frame as a determination criteria of a desired edit area for a desired edit target on a screen by a movement of a pointer on a displayed image;
calculating (S6, S7) an amount of movement of the pointer in a predetermined unit time while the designation of the cater-cornered points continues, wherein designation of the ending point starts when the pointer moves; and
changing (S8, S9, S10, S11) a display scaling of the edit target according to the amount of movement of the pointer in the predetermined unit time, and displaying the edit target on a display device.

19. A screen editing program used to direct a computer to perform the process, comprising the steps of:
designating a starting point and an ending point being cater-cornered points of an edit frame as a determination criteria of a desired edit area for a desired edit target on a screen by a movement of a pointer on a displayed image;
calculating an amount of movement of the pointer in a predetermined unit time while the designation of the cater-cornered points continues, wherein designation of the ending point starts when the pointer moves; and
changing a display scaling of the edit target according to the amount of movement of the pointer in the predetermined unit time, and displaying the edit target on a display device.

## Patentansprüche

1. Bildschirm-Bearbeitungsvorrichtung (43), umfassend:
eine Bezeichnungseinheit zum Bezeichnen eines Startpunkts und eines Endpunkts, die Schrägschnittpunkte eines Bearbeitungsrahmens sind, als ein Bestimmungskriterium eines gewünschten Bearbeitungsbereichs für ein gewünschtes Bearbeitungsziel auf einem Bildschirm durch eine Bewegung eines Zeigers auf einem angezeigten Bild;
eine Berechnungseinheit zum Berechnen einer Menge der Bewegung des Zeigers in einer vorgegebenen Zeiteinheit, während das Bezeichnen der Schrägschnittpunkte fortfährt, wobei das Bezeichnen des Endpunkts startet, wenn sich der Zeiger bewegt; und
eine Anzeigesteuereinheit zum Ändern einer Anzeigeskalierung des Bearbeitungsziels gemäß der Menge der Bewegung des Zeigers in der vorgegebenen Zeiteinheit und Anzeigen des Bearbeitungsziels auf einer Anzeigevorrichtung.

2. Bildschirm-Bearbeitungsvorrichtung nach Anspruch 1, wobei die Anzeigesteuereinheit das Bearbeitungsziel um einen vorgegebenen Vergrößerungsfaktor vergrößert und anzeigt, wenn die Menge der Bewegung des Zeigers in der vorgegebenen Zeiteinheit kleiner ist als eine vorgegebene Menge.

3. Bildschirm-Bearbeitungsvorrichtung nach Anspruch 2, wobei die Anzeigesteuereinheit das Bearbeitungsziel um einen vorgegebenen Verkleinerungsfaktor verkleinert und anzeigt, wenn das Bezeichnen der Schrägschnittpunkte eingestellt wird.

4. Bildschirm-Bearbeitungsvorrichtung nach Anspruch 3, wobei der vorgegebene Verkleinerungsfaktor ein Faktor zum Anzeigen des Bearbeitungsziels ist, um einen Anzeigebereich der Anzeigevorrichtung zu füllen.

5. Bildschirm-Bearbeitungsvorrichtung nach einem der Ansprüche 1 bis 4, wobei die Anzeigesteuereinheit einen Bearbeitungsrahmen zur Angabe eines Randes des Bearbeitungsbereichs auf der Anzeigevorrichtung anzeigt.

6. Bildschirm-Bearbeitungsvorrichtung nach Anspruch 5, wobei:
die Bezeichnungseinheit eine Bewegung der Schrägschnittpunkte des Bearbeitungsrahmens durch die Bewegung des Zeigers bezeichnet;
die Berechnungseinheit die Menge der Bewegung des Zeigers in der vorgegebenen Zeiteinheit berechnet, während das Bezeichnen der Bewegung der Schrägschnittpunkte fortfährt; und
die Anzeigesteuereinheit das Bearbeitungsziel gemäß der Menge der Bewegung des Zeigers in der vorgegebenen Zeiteinheit und Anzeigen des Bearbeitungsziels vergrößert oder verkleinert und das Bearbeitungsziel auf der Anzeigevorrichtung anzeigt.

7. Bildschirm-Bearbeitungsvorrichtung nach Anspruch 6, wobei die Anzeigesteuereinheit die Schrägschnittpunkte gemäß der Bezeichnung der Bewegung der Schrägschnittpunkte bewegt und anzeigt.

8. Bildschirm-Bearbeitungsvorrichtung nach Anspruch 5, wobei:
die Bezeichnungseinheit die Bewegung des Bearbeitungsrahmens durch die Bewegung des Zeigers bezeichnet;
die Berechnungseinheit die Menge der Bewegung des Zeigers in der vorgegebenen Zeiteinheit berechnet, während das Bezeichnen der Bewegung des Bearbeitungsrahmens fortfährt; und
die Anzeigesteuereinheit das Bearbeitungsziel gemäß der Menge der Bewegung des Zeigers in der vorgegebenen Zeiteinheit vergrößert oder verkleinert und das Bearbeitungsziel auf der Anzeigevorrichtung anzeigt.

9. Bildschirm-Bearbeitungsvorrichtung nach Anspruch 8, wobei die Anzeigesteuereinheit den Bearbeitungsrahmen gemäß der Bezeichnung der Bewegung des Bearbeitungsrahmens bewegt und anzeigt.

10. Bildschirm-Bearbeitungsvorrichtung nach Anspruch 5, wobei die Bezeichnungseinheit eine Größenänderung des Bearbeitungsrahmens durch die Bewegung des Zeigers bezeichnet;
die Berechnungseinheit die Menge der Bewegung des Zeigers in der vorgegebenen Zeiteinheit berechnet, während das Bezeichnen der Größenänderung des Bearbeitungsrahmens fortfährt; und
die Anzeigesteuereinheit das Bearbeitungsziel gemäß der Menge der Bewegung des Zeigers in der vorgegebenen Zeiteinheit vergrößert oder verkleinert und das Bearbeitungsziel auf der Anzeigevorrichtung anzeigt.

11. Bildschirm-Bearbeitungsvorrichtung nach Anspruch 10, wobei die Anzeigesteuereinheit die Größe des Bearbeitungsrahmens gemäß der Bezeichnung der Größenänderung des Bearbeitungsrahmens ändert und das Bearbeitungsziel anzeigt.

12. Bildschirm-Bearbeitungsvorrichtung nach Anspruch 1, wobei gemäß einer Größenbeziehung zwischen vorgegebenen mehreren abgestuften Schwellen und der Menge der Bewegung des Zeigers in der vorgegebenen Zeiteinheit die Anzeigesteuereinheit eine Anzeigenskalierung des Bearbeitungsziels zu einem beliebigen von vorgegebenen mehreren abgestuften Faktoren entsprechend der Größenbeziehung wechselt und das Bearbeitungsziel auf der Anzeigevorrichtung anzeigt.

13. Bildschirm-Bearbeitungsvorrichtung nach Anspruch 12, wobei die Anzeigesteuereinheit eine Anzeigenskalierung ändert, so dass ein Teil des vom Bearbeitungsrahmen eingeschlossenen Bearbeitungsziels an die Fläche der Anzeigevorrichtung angepasst werden kann, wenn das Bezeichnen der Schrägschnittpunkte eingestellt wird, und anschließend das Bearbeitungsziel anzeigt.

14. Bildschirm-Bearbeitungsvorrichtung nach Anspruch 1, wobei die Anzeigesteuereinheit schrittweise die Anzeigenskalierung des Bearbeitungsziels gemäß der Menge der Bewegung des Zeigers in der vorgegebenen Zeit kleiner als eine vorgegebene Menge ändert und das Bearbeitungsziel anzeigt.

15. Bildschirm-Bearbeitungsvorrichtung nach Anspruch 14, wobei die Anzeigesteuereinheit eine aktuelle Anzeigenskalierung gemäß der Menge der Bewegung des Zeigers in der vorgegebenen Zeiteinheit entsprechend einer vorgegebenen Menge oder mehr beibehält und das Bearbeitungsziel anzeigt.

16. Bildschirm-Bearbeitungsvorrichtung nach Anspruch 14, wobei die Anzeigesteuereinheit die Anzeigenskalierung des Bearbeitungsziels zu einer Anzeigenskalierung angepasst an die Anzeigefläche der Anzeigevorrichtung gemäß der Menge der Bewegung des Zeigers in der vorgegebenen Zeiteinheit entsprechend der vorgegebenen Menge oder mehr ändert und das Bearbeitungsziel anzeigt.

17. Bildschirm-Bearbeitungsvorrichtung nach einem der Ansprüche 1 bis 16, wobei die Anzeigesteuereinheit das Bearbeitungsziel in einem vorgegebenen ersten Anzeigebereich der Anzeigevorrichtung gemäß der Menge der Bewegung des Zeigers in der vorgegebenen Zeiteinheit vergrößert oder verkleinert und das Bearbeitungsziel anzeigt und ein gesamtes Bearbeitungsziel in einem vorgegebenen zweiten Anzeigebereich der Anzeigevorrichtung anzeigt.

18. Computerimplementiertes Verfahren zur Bildschirmbearbeitung, umfassend die Schritte zum:
Bezeichnen (S1, S2, S3, S4, S5) eines Startpunkts und eines Endpunkts, die Schrägschnittpunkte eines Bearbeitungsrahmens sind, als ein Bestimmungskriterium eines gewünschten Bearbeitungsbereichs für ein gewünschtes Bearbeitungsziel auf einem Bildschirm durch eine Bewegung eines Zeigers auf einem angezeigten Bild;
Berechnen (S6, S7) einer Menge der Bewegung des Zeigers in einer vorgegebenen Zeiteinheit, während das Bezeichnen der Schrägschnittpunkte fortfährt, wobei das Bezeichnen des Endpunkts startet, wenn sich der Zeiger bewegt; und
Ändern (S8, S9, S10, S11) einer Anzeigeskalierung des Bearbeitungsziels gemäß der Menge der Bewegung des Zeigers in der vorgegebenen Zeiteinheit und Anzeigen des Bearbeitungsziels auf einer Anzeigevorrichtung.

19. Zum Anweisen eines Computers zum Durchführen des Prozesses verwendetes Bildschirm-Bearbeitungsprogramm, umfassend die Schritte zum:
Bezeichnen eines Startpunkts und eines Endpunkts, die Schrägschnittpunkte eines Bearbeitungsrahmens sind, als ein Bestimmungskriterium eines gewünschten Bearbeitungsbereichs für ein gewünschtes Bearbeitungsziel auf einem Bildschirm durch eine Bewegung eines Zeigers auf einem angezeigten Bild;
Berechnen einer Menge der Bewegung des Zeigers in einer vorgegebenen Zeiteinheit, während das Bezeichnen der Schrägschnittpunkte fortfährt, wobei das Bezeichnen des Endpunkts startet, wenn sich der Zeiger bewegt; und
Ändern einer Anzeigeskalierung des Bearbeitungsziels gemäß der Menge der Bewegung des Zeigers in der vorgegebenen Zeiteinheit und Anzeigen des Bearbeitungsziels auf einer Anzeigevorrichtung.

## Revendications

1. Appareil d'édition d'écran (43) comprenant :
une unité de désignation permettant de désigner un point de départ et un point de fin, qui sont des points diagonaux d'une trame d'édition, sous forme de critères de détermination d'une zone d'édition souhaitée pour une cible d'édition souhaitée sur un écran grâce au mouvement d'un pointeur sur une image affichée,
une unité de calcul permettant de calculer l'amplitude de mouvement du pointeur dans une unité de temps prédéterminée alors que la désignation des points diagonaux se poursuit, la désignation du point de fin démarrant lorsque le pointeur se déplace, et
une unité de commande d'affichage permettant de modifier la mise à l'échelle de l'affichage de la cible d'édition en fonction de l'amplitude de mouvement du pointeur dans l'unité de temps prédéterminée, et permettant d'afficher la cible d'édition sur un dispositif d'affichage.

2. Appareil d'édition d'écran selon la revendication 1, dans lequel l'unité de commande d'affichage magnifie et affiche la cible d'édition d'un facteur prédéterminé de mise à l'échelle lorsque l'amplitude de mouvement du pointeur dans l'unité de temps prédéterminée est inférieure à une valeur prédéterminée.

3. Appareil d'édition d'écran selon la revendication 2, dans lequel l'unité de commande d'affichage réduit et affiche la cible d'édition d'un facteur prédéterminé de réduction lorsque la désignation des points diagonaux est diffusée.

4. Appareil d'édition d'écran selon la revendication 3, dans lequel le facteur prédéterminé de réduction est un facteur destiné à l'affichage de la cible d'édition de sorte à remplir une zone d'affichage du dispositif d'affichage.

5. Appareil d'édition d'écran selon l'une quelconque des revendications 1 à 4, dans lequel l'unité de commande d'affichage affiche une trame d'édition indiquant un bord de la zone d'édition sur le dispositif d'affichage.

6. Appareil d'édition d'écran selon la revendication 5, dans lequel :
l'unité de désignation indique un mouvement des points diagonaux de la trame d'édition grâce au mouvement du pointeur,
l'unité de calcul calcule l'amplitude de mouvement du pointeur dans l'unité de temps prédéterminée alors que la désignation du mouvement des points diagonaux se poursuit, et
l'unité de commande d'affichage magnifie ou réduit la cible d'édition en fonction de l'amplitude de mouvement du pointeur dans l'unité de temps prédéterminée, et elle affiche la cible d'édition sur le dispositif d'affichage.

7. Appareil d'édition d'écran selon la revendication 6, dans lequel l'unité de commande d'affichage déplace et affiche les points diagonaux en fonction de la désignation du mouvement des points diagonaux.

8. Appareil d'édition d'écran selon la revendication 5, dans lequel :
l'unité de désignation indique le mouvement de la trame d'édition grâce au mouvement du pointeur,
l'unité de calcul calcule l'amplitude de mouvement du pointeur dans l'unité de temps prédéterminée alors que la désignation de la trame d'édition se poursuit, et
l'unité de commande d'affichage magnifie ou réduit la cible d'édition en fonction de l'amplitude de mouvement du pointeur dans l'unité de temps prédéterminée, et elle affiche la cible d'affichage sur le dispositif d'affichage.

9. Appareil d'édition d'écran selon la revendication 8, dans lequel l'unité de commande d'affichage déplace et affiche la trame d'édition en fonction de la désignation du mouvement de la trame d'édition.

10. Appareil d'édition d'écran selon la revendication 5, dans lequel l'unité de désignation indique un changement de taille de la trame d'édition grâce au mouvement du pointeur,
l'unité de calcul calcule l'amplitude de mouvement du pointeur dans l'unité de temps prédéterminée alors que la désignation de la modification de taille de la trame d'édition se poursuit, et
l'unité de commande d'affichage magnifie ou réduit la cible d'édition en fonction de l'amplitude de mouvement du pointeur dans l'unité de temps prédéterminée, et elle affiche la cible d'émission sur un dispositif d'affichage.

11. Appareil d'édition d'écran selon la revendication 10, dans lequel l'unité de commande d'affichage modifie la taille de la trame d'édition en fonction de la désignation de la modification de taille de la trame d'édition, et elle affiche la cible d'édition.

12. Appareil d'édition d'écran selon la revendication 1, dans lequel, en fonction de la relation de taille entre plusieurs seuils prédéterminés établis par pas et l'amplitude de mouvement du pointeur dans l'unité de temps prédéterminée, l'unité de commande d'affichage bascule la mise à l'échelle d'affichage de la cible d'édition sur l'un quelconque des différents facteurs prédéterminés établis par pas correspondant à la relation de taille, et elle affiche la cible d'édition sur le dispositif d'affichage.

13. Appareil d'édition d'écran selon la revendication 12, dans lequel l'unité de commande d'affichage modifie la mise à l'échelle d'affichage de sorte à ce qu'une partie de la cible d'édition entourée par le cadre d'édition puisse être adaptée à la surface du dispositif d'affichage lorsque la désignation des points diagonaux est diffusée, et elle affiche ensuite la cible d'édition.

14. Appareil d'édition d'écran selon la revendication 1, dans lequel l'unité de commande d'affichage modifie par pas la mise à l'échelle d'affichage de la cible d'édition en fonction de ce que l'amplitude du mouvement du pointeur dans l'unité de temps prédéterminée est inférieure à une amplitude prédéterminée, et elle affiche la cible d'édition.

15. Appareil d'édition d'écran selon la revendication 14, dans lequel l'unité de commande d'affichage maintient la mise à l'échelle courante d'affichage en fonction de ce que l'amplitude de mouvement du pointeur dans l'unité de temps prédéterminée représente une valeur prédéterminée ou plus, et elle affiche la cible d'édition.

16. Appareil d'édition d'écran selon la revendication 14, dans lequel l'unité de commande d'affichage modifie la mise à l'échelle d'affichage de la cible d'édition pour une mise à l'échelle d'affichage adaptée à la surface d'affichage du dispositif d'affichage en fonction de ce que l'amplitude de mouvement du pointeur dans l'unité de temps prédéterminée représente la valeur prédéterminée ou plus, et elle affiche la cible d'édition.

17. Appareil d'édition d'écran selon l'une quelconque des revendications 1 à 16, dans lequel l'unité de commande d'affichage magnifie ou réduit la cible d'édition dans une première zone d'affichage prédéterminée du dispositif d'affichage en fonction de l'amplitude de mouvement du pointeur dans l'unité de temps prédéterminée, et elle affiche la cible d'édition, et elle affiche la cible entière d'édition dans une seconde zone d'affichage prédéterminée du dispositif d'affichage.

18. Procédé mis en œuvre sur ordinateur permettant de réaliser une édition d'écran, comprenant les étapes suivantes :
la désignation (S1, S2, S3, S4, S5) d'un point de départ et d'un point de fin, qui sont des points diagonaux d'une trame d'édition, sous forme de critères de détermination d'une zone d'édition souhaitée pour une cible d'édition souhaitée sur un écran grâce au mouvement d'un pointeur sur une image affichée,
le calcul (S6, S7) de l'amplitude de mouvement du pointeur dans une unité de temps prédéterminée alors que la désignation des points diagonaux se poursuit, la désignation du point de fin démarrant lorsque le pointeur se déplace, et
la modification (S8, S9, S10, S11) de la mise à l'échelle de l'affichage de la cible d'édition en fonction de l'amplitude de mouvement du pointeur dans l'unité de temps prédéterminée, et l'affichage de la cible d'édition sur un dispositif d'affichage.

19. Programme d'édition d'écran utilisé pour ordonner à un ordinateur d'effectuer le traitement, comprenant les étapes suivantes :
la désignation d'un point de départ et d'un point de fin, qui sont des points diagonaux d'une trame d'édition, sous forme de critères de détermination d'une zone d'édition souhaitée pour une cible d'édition souhaitée sur un écran grâce au mouvement d'un pointeur sur une image affichée,
le calcul de l'amplitude de mouvement du pointeur dans une unité de temps prédéterminée alors que la désignation des points diagonaux se poursuit, la désignation du point de fin démarrant lorsque le pointeur se déplace, et
la modification de la mise à l'échelle de l'affichage de la cible d'édition en fonction de l'amplitude de mouvement du pointeur dans l'unité de temps prédéterminée, et l'affichage de la cible d'édition sur un dispositif d'affichage.
